# EUROPEAN PATENT APPLICATION

(11) **EP 4 415 400 A1**
(43) Date of publication of application: **14.08.2024**
(21) Application number: 22885741.3
(22) Date of filing: 18.10.2022
(51) Int. Cl.: H04W 4/70

(54) **COMMUNICATION METHOD AND APPARATUS, DEVICE, AND STORAGE MEDIUM**

(30) Priority: 29.10.2021 CN 202111276280
(71) Applicant: Huawei Technologies Co., Ltd., Shenzhen, Guangdong 518129 (CN)
(72) Inventor: LUO, Zhihu, Shenzhen, Guangdong 518129 (CN); WU, Yiling, Shenzhen, Guangdong 518129 (CN); JIN, Zhe, Shenzhen, Guangdong 518129 (CN); LU, Zhenwei, Shenzhen, Guangdong 518129 (CN)
(74) Representative: Maiwald GmbH
(86) International application number: PCT/CN2022/125890
(87) International publication number: WO 2023/071863

(57) **Abstract**

This application provides a communication method, apparatus, and device, and a storage medium. The method includes: A first device determines a time domain resource starting from a start location of communication, where the time domain resource includes a first time domain resource and a second time domain resource, there is at an interval of a first interval duration between the first time domain resource and the second time domain resource, a time domain length of the first time domain resource is related to a first transmission duration, and a time domain length of the second time domain resource is a second transmission duration; and the first device communicates with a second device on the time domain resource. In this way, the first device and the second device communicate with each other in communication systems (such as an NR communication system).

## Description

This application claims priority to Chinese Patent Application No. 202111276280.5, filed with the China National Intellectual Property Administration on October 29, 2021 and entitled "COMMUNICATION METHOD, APPARATUS, AND DEVICE, AND STORAGE MEDIUM", which is incorporated herein by reference in its entirety.

### TECHNICAL FIELD

This application relates to the field of communication technologies, and in particular, to a communication method, apparatus, and device, and a storage medium.

### BACKGROUND

As machine-type communication (machine-type communication, MTC) and internet of things (internet of things, IoT) communication are widely used, requirements for reducing application costs and power consumption of the IoT by supporting technologies such as radio frequency identification (radio frequency identification, RFID) and a wake-up receiver or wake-up radio (wake-up receiver or wake-up radio, WUR) in some communication systems such as a 5th generation (5th generation, 5G) mobile communication system becomes increasingly high. To meet such a requirement, how to apply the RFID and WUR technologies to communication systems is an urgent problem to be resolved currently.

### SUMMARY

Embodiments of this application provide a communication method, apparatus, and device, and a storage medium, to implement convergence of RFID, WUR, or a technology similar to the RFID or the WUR with communication systems.

According to a first aspect, an embodiment of this application provides a communication method. The method includes: A first device determines a time domain resource starting from a start location of communication, where the time domain resource includes a first time domain resource and a second time domain resource, there is at an interval of a first interval duration between the first time domain resource and the second time domain resource, a time domain length of the first time domain resource is related to a first transmission duration, and a time domain length of the second time domain resource is a second transmission duration; and the first device communicates with a second device on the time domain resource.

According to the communication method provided in the first aspect, the first device determines the time domain resource starting from the start location of the communication, and communicates with the second device on the time domain resource, so that the first device can communicate with the second device in communication systems (for example, an NR communication system), that is, convergence of the IoT and another communication system is implemented.

Further, the time domain resource determined by the first device includes the first time domain resource and the second time domain resource, and there is the first interval duration between the first time domain resource and the second time domain resource, so that the first device can determine a time period in which communication can be performed and a time period in which communication cannot be performed without maintaining timing information (for example, a frame number or a slot number), thereby reducing complexity of the first device and reducing costs of the first device.

In a possible implementation, the first transmission duration is the same as the second transmission duration.

According to the communication method provided in this implementation, the first device communicates with the second device on a plurality of time domain resources that have a same time domain length and that have a time domain interval. This may be applicable to a communication system in which a slot configuration is single-period.

In a possible implementation, the first transmission duration is different from the second transmission duration.

In a possible implementation, the time domain resource further includes a third time domain resource, there is at an interval of a second interval duration between the second time domain resource and the third time domain resource, a time domain length of the third time domain resource is related to the first transmission duration, and the second interval duration is different from the first interval duration.

According to the communication method provided in this implementation, the first device communicates with the second device on the first time domain resource whose time domain length is the first transmission duration and the second time domain resource whose time domain length is the second transmission duration. This may be applicable to a communication system in which a slot configuration is dual-period.

In a possible implementation, a start time domain location of the first time domain resource is an offset location or the start location of the communication, and the offset location is determined based on an offset and the start location of the communication.

According to the communication method provided in this implementation, when transmission is performed between the first device and the second device, transmission may not be limited to starting from a boundary of a communication period (for example, a TDD single period or a TDD dual period), thereby improving flexibility of resource scheduling.

In a possible implementation, the offset location is equal to a sum of the offset and the start location of the communication.

In a possible implementation, the method further includes: The first device receives configuration information sent by the second device, where the configuration information includes the first transmission duration and/or the first interval duration.

According to the communication method provided in this implementation, the first device may determine, with reference to the configuration information, a time domain resource that may be used for transmission and a time domain resource that is not used for transmission, and does not need to maintain timing information (such as the frame number or the slot number) at all time, thereby reducing complexity of the first device.

In a possible implementation, the configuration information further includes the second transmission duration.

According to the communication method provided in this implementation, the transmission between the first device and the second device is better applicable to the communication system in which the slot configuration is dual-period.

In a possible implementation, the configuration information further includes a second interval duration, and the second interval duration is different from the first interval duration.

According to the communication method provided in this implementation, when the first transmission duration is different from the second transmission duration, the first interval duration is different from the second interval duration, so that the first transmission duration and the first interval duration are the same as a first period of the dual-period, and the second transmission duration and the second interval duration are the same as a second period of the dual-period. This is applicable to the communication system in which the slot configuration is dual-period.

In a possible implementation, the configuration information further includes an offset, and the offset is used to determine a start time domain location of the first time domain resource.

According to the communication method provided in this implementation, the first device can quickly locate the start location of the first time domain resource based on the offset in the configuration information, thereby improving processing efficiency of determining the time domain resource while ensuring resource scheduling flexibility.

In a possible implementation, both the first time domain resource and the second time domain resource include at least one of an uplink slot, an uplink symbol, a flexible slot, and a flexible symbol, and a resource between the first time domain resource and the second time domain resource includes at least one of a downlink slot, a downlink symbol, a flexible slot, and a flexible symbol; or both the first time domain resource and the second time domain resource include at least one of a downlink slot, a downlink symbol, a flexible slot, and a flexible symbol, and a resource between the first time domain resource and the second time domain resource includes at least one of an uplink slot, an uplink symbol, a flexible slot, and a flexible symbol.

According to the communication method provided in this implementation, a time domain resource used for communication between the first device and the second device corresponds to a slot configuration in a communication system, thereby reducing interference of uplink/downlink transmission.

In a possible implementation, that the first device communicates with a second device on the time domain resource includes: The first device receives, on the time domain resource and a first frequency domain resource, downlink data sent by the second device; and the first device sends, on the time domain resource and a second frequency domain resource, uplink data to the second device through backscatter communication, where there is a frequency domain interval between the first frequency domain resource and the second frequency domain resource.

According to the communication method provided in this implementation, the first device can be prevented from sending uplink data and receiving downlink data at a same frequency, thereby improving transmission reliability.

In a possible implementation, the time domain resource includes at least one of an uplink slot, an uplink symbol, a flexible slot, and a flexible symbol on the first frequency domain resource, and the time domain resource includes at least one of a downlink slot, a downlink symbol, a flexible slot, and a flexible symbol on the second frequency domain resource; or the time domain resource includes at least one of a downlink slot, a downlink symbol, a flexible slot, and a flexible symbol on the first frequency domain resource, and the time domain resource includes at least one of an uplink slot, an uplink symbol, a flexible slot, and a flexible symbol on the second frequency domain resource.

According to the communication method provided in this implementation, interference caused by different directions between transmission between the first device and the second device and data transmission in a communication system (for example, an NR system) can be avoided, thereby improving transmission reliability.

In a possible implementation, the method further includes: The first device receives frequency domain interval information sent by the second device, where the frequency domain interval information indicates the frequency domain interval between the first frequency domain resource and the second frequency domain resource.

According to the communication method provided in this implementation, the first device and the second device can synchronize a frequency domain interval, so that the first device and the second device can determine, based on a same frequency domain interval, the first frequency domain resource or the second frequency domain resource used for communication.

In a possible implementation, the method further includes: When a preset timer expires, the first device determines that the configuration information is invalid; or when a preset timer does not expire, the first device determines that the configuration information is valid.

According to the communication method provided in this implementation, validity of the configuration information is verified.

In a possible implementation, the method further includes: The first device sends capability information to the second device, where the capability information indicates a maximum frequency domain interval that is between the first frequency domain resource and the second frequency domain resource and that is supported by the first device.

According to the communication method provided in this implementation, the second device determines the frequency domain interval between the first frequency domain resource and the second frequency domain resource based on the maximum frequency domain interval, to avoid that a frequency domain interval configured for the first device exceeds a capability range of the first device.

According to a second aspect, an embodiment of this application provides a communication method. The method includes: A second device determines a time domain resource starting from a start location of communication, where the time domain resource includes a first time domain resource and a second time domain resource, there is at an interval of a first interval duration between the first time domain resource and the second time domain resource, a time domain length of the first time domain resource is related to a first transmission duration, and a time domain length of the second time domain resource is a second transmission duration; and the second device communicates with a first device on the time domain resource.

In a possible implementation, the first transmission duration is the same as the second transmission duration.

In a possible implementation, the first transmission duration is different from the second transmission duration.

In a possible implementation, the time domain resource further includes a third time domain resource, there is at an interval of a second interval duration between the second time domain resource and the third time domain resource, a time domain length of the third time domain resource is related to the first transmission duration, and the second interval duration is different from the first interval duration.

In a possible implementation, a start time domain location of the first time domain resource is an offset location or the start location of the communication, and the offset location is determined based on an offset and the start location of the communication.

In a possible implementation, the offset location is equal to a sum of the offset and the start location of the communication.

In a possible implementation, the method further includes: The second device sends configuration information to the first device, where the configuration information includes the first transmission duration and/or the first interval duration.

In a possible implementation, the configuration information further includes the second transmission duration.

In a possible implementation, the configuration information further includes a second interval duration, and the second interval duration is different from the first interval duration.

In a possible implementation, the configuration information further includes an offset, and the offset is used to determine a start time domain location of the first time domain resource.

In a possible implementation, both the first time domain resource and the second time domain resource include at least one of an uplink slot, an uplink symbol, a flexible slot, and a flexible symbol, and a resource between the first time domain resource and the second time domain resource includes at least one of a downlink slot, a downlink symbol, a flexible slot, and a flexible symbol; or both the first time domain resource and the second time domain resource include at least one of a downlink slot, a downlink symbol, a flexible slot, and a flexible symbol, and a resource between the first time domain resource and the second time domain resource includes at least one of an uplink slot, an uplink symbol, a flexible slot, and a flexible symbol.

In a possible implementation, that the second device communicates with a first device on the time domain resource includes: The second device sends, on the time domain resource and a first frequency domain resource, downlink data to the first device; and the second device receives, on the time domain resource and a second frequency domain resource, uplink data sent by the first device through backscatter communication, where there is a frequency domain interval between the first frequency domain resource and the second frequency domain resource.

In a possible implementation, the time domain resource includes at least one of an uplink slot, an uplink symbol, a flexible slot, and a flexible symbol on the first frequency domain resource, and the time domain resource includes at least one of a downlink slot, a downlink symbol, a flexible slot, and a flexible symbol on the second frequency domain resource; or the time domain resource includes at least one of a downlink slot, a downlink symbol, a flexible slot, and a flexible symbol on the first frequency domain resource, and the time domain resource includes at least one of an uplink slot, an uplink symbol, a flexible slot, and a flexible symbol on the second frequency domain resource.

In a possible implementation, the method further includes: When a preset timer expires, the second device determines that the configuration information is invalid; or when a preset timer does not expire, the second device determines that the configuration information is valid.

In a possible implementation, the method further includes: The second device sends frequency domain interval information to the first device, where the frequency domain interval information indicates the frequency domain interval between the first frequency domain resource and the second frequency domain resource.

In a possible implementation, the method further includes: The second device receives capability information sent by the first device, where the capability information indicates a maximum frequency domain interval that is between the first frequency domain resource and the second frequency domain resource and that is supported by the first device.

For beneficial effect of the communication method provided in the second aspect and the possible implementations of the second aspect, refer to the beneficial effect brought by the first aspect and the possible implementations of the first aspect. Details are not described herein again.

According to a third aspect, an embodiment of this application provides a communication method, including: A first device receives first time-frequency resource configuration information and second time-frequency resource configuration information that are sent by a second device, where the first time-frequency resource configuration information is used to configure a first frequency domain resource and a time domain resource corresponding to the first frequency domain resource, and the second time-frequency resource configuration information is used to configure a second frequency domain resource and/or a time domain resource corresponding to the second frequency domain resource. The first device communicates with the second device through backscatter communication on the first frequency domain resource and the time domain resource corresponding to the first frequency domain resource, and/or the second frequency domain resource and the time domain resource corresponding to the second frequency domain resource; the time domain resource corresponding to the first frequency domain resource and the time domain resource corresponding to the second frequency domain resource each include at least one first time unit, the first time unit is of a first resource type on the time domain resource corresponding to the first frequency domain resource, and the first time unit is of a second resource type on the time domain resource corresponding to the second frequency domain resource; and the first time unit of the first resource type includes an uplink slot, a flexible slot, an uplink symbol, or a flexible symbol, and the first time unit of the second resource type includes a downlink slot, a flexible slot, a downlink symbol, or a flexible symbol.

In a possible implementation, first proportions respectively corresponding to the first frequency domain resource and the second frequency domain resource are the same, and the first proportion is a ratio of a quantity of time units corresponding to the first resource type to a quantity of time units corresponding to the second resource type in a same duration; or first proportions respectively corresponding to the first frequency domain resource and the second frequency domain resource are reciprocal of each other; or all time units corresponding to the first frequency domain resource are of the first resource type, and all time units corresponding to the second frequency domain resource are of the second resource type; or all time units corresponding to the first frequency domain resource are of a same resource type, and all time units corresponding to the second frequency domain resource are of different resource types; or all time units corresponding to the first frequency domain resource are of different resource types, and all time units corresponding to the second frequency domain resource are of a same resource type.

In a possible implementation, when the second time-frequency resource configuration information is used to configure the second frequency domain resource, the method further includes: The first device determines, based on the time domain resource corresponding to the first frequency domain resource, the time domain resource corresponding to the second frequency domain resource.

In a possible implementation, the second time-frequency resource configuration information includes frequency domain interval information or configuration information of the second frequency domain resource, and the frequency domain interval information indicates a frequency domain interval between the second frequency domain resource and the first frequency domain resource.

In a possible implementation, the method further includes: The first device sends capability information to the second device, where the capability information indicates a maximum frequency domain interval that is between the first frequency domain resource and the second frequency domain resource and that is supported by the first device.

In a possible implementation, any time-frequency resource configuration information includes a first transmission duration and/or a first interval duration, a time domain resource configured by using the time-frequency resource configuration information includes a first time domain resource and a second time domain resource, there is the first interval duration between the first time domain resource and the second time domain resource, and both a time domain length of the first time domain resource and a time domain length of the second time domain resource are the first transmission duration.

In a possible implementation, the time-frequency resource configuration information further includes a second transmission duration, and the time domain length of the second time domain resource is the second transmission duration.

In a possible implementation, the time-frequency resource configuration information further includes a second interval duration, the time domain resource configured by using the time-frequency resource configuration information further includes a third time domain resource, and there is the second interval duration between the second time domain resource and the third time domain resource.

In a possible implementation, the time-frequency resource configuration information further includes an offset, and the offset is used to determine a start time domain location of the first time domain resource.

For beneficial effect of the communication method provided in the third aspect and the possible implementations of the third aspect, refer to beneficial effect brought by the first aspect and the possible implementations of the first aspect. Details are not described herein again.

According to a fourth aspect, an embodiment of this application provides a communication method, including: A second device sends first time-frequency resource configuration information and second time-frequency resource configuration information to a first device, where the first time-frequency resource configuration information is used to configure a first frequency domain resource and a time domain resource corresponding to the first frequency domain resource, and the second time-frequency resource configuration information is used to configure a second frequency domain resource and/or a time domain resource corresponding to the second frequency domain resource. The second device communicates with the first device through backscatter communication on the first frequency domain resource and the time domain resource corresponding to the first frequency domain resource, and/or the second frequency domain resource and the time domain resource corresponding to the second frequency domain resource; the time domain resource corresponding to the first frequency domain resource and the time domain resource corresponding to the second frequency domain resource each include at least one first time unit, the first time unit is of a first resource type on the time domain resource corresponding to the first frequency domain resource, and the first time unit is of a second resource type on the time domain resource corresponding to the second frequency domain resource; and the first time unit of the first resource type includes an uplink slot, a flexible slot, an uplink symbol, or a flexible symbol, and the first time unit of the second resource type includes a downlink slot, a flexible slot, a downlink symbol, or a flexible symbol.

In a possible implementation, first proportions respectively corresponding to the first frequency domain resource and the second frequency domain resource are the same, and the first proportion is a ratio of a quantity of time units corresponding to the first resource type to a quantity of time units corresponding to the second resource type in a same duration; or first proportions respectively corresponding to the first frequency domain resource and the second frequency domain resource are reciprocal of each other; or all time units corresponding to the first frequency domain resource are of the first resource type, and all time units corresponding to the second frequency domain resource are of the second resource type; or all time units corresponding to the first frequency domain resource are of a same resource type, and all time units corresponding to the second frequency domain resource are of different resource types; or all time units corresponding to the first frequency domain resource are of different resource types, and all time units corresponding to the second frequency domain resource are of a same resource type.

In a possible implementation, when the second time-frequency resource configuration information is used to configure the second frequency domain resource, the method further includes: The second device determines, based on the time domain resource corresponding to the first frequency domain resource, the time domain resource corresponding to the second frequency domain resource.

In a possible implementation, the second time-frequency resource configuration information includes frequency domain interval information or configuration information of the second frequency domain resource, and the frequency domain interval information indicates a frequency domain interval between the second frequency domain resource and the first frequency domain resource.

In a possible implementation, the method further includes: The second device receives capability information sent by the first device, where the capability information indicates a maximum frequency domain interval that is between the first frequency domain resource and the second frequency domain resource and that is supported by the first device.

In a possible implementation, any time-frequency resource configuration information includes a first transmission duration and/or a first interval duration, a time domain resource configured by using the time-frequency resource configuration information includes a first time domain resource and a second time domain resource, there is the first interval duration between the first time domain resource and the second time domain resource, and both a time domain length of the first time domain resource and a time domain length of the second time domain resource are the first transmission duration.

In a possible implementation, the time-frequency resource configuration information further includes a second transmission duration, and the time domain length of the second time domain resource is the second transmission duration.

In a possible implementation, the time-frequency resource configuration information further includes a second interval duration, the time domain resource configured by using the time-frequency resource configuration information further includes a third time domain resource, and there is the second interval duration between the second time domain resource and the third time domain resource.

In a possible implementation, the time-frequency resource configuration information further includes an offset, and the offset is used to determine a start time domain location of the first time domain resource.

For beneficial effect of the communication method provided in the fourth aspect and the possible implementations of the fourth aspect, refer to beneficial effect brought by the first aspect and the possible implementations of the first aspect. Details are not described herein again.

According to a fifth aspect, an embodiment of this application provides a communication method, including: A first device sends capability information to a second device, where the capability information indicates a maximum frequency domain interval that is between a first frequency domain resource and a second frequency domain resource and that is supported by the first device; the first device receives, on the first frequency domain resource, downlink data sent by the second device; and the first device sends, on the second frequency domain resource, uplink data to the second device through backscatter communication, where a frequency domain interval between the first frequency domain resource and the second frequency domain resource is less than or equal to the maximum frequency domain interval.

In a possible implementation, the method further includes: The first device receives configuration information sent by the second device, where the configuration information includes frequency domain interval information, and the frequency domain interval information indicates the frequency domain interval between the first frequency domain resource and the second frequency domain resource.

For beneficial effect of the communication method provided in the fifth aspect and the possible implementations of the fifth aspect, refer to beneficial effect brought by the first aspect and the possible implementations of the first aspect. Details are not described herein again.

According to a sixth aspect, an embodiment of this application provides a communication method, including: A second device receives capability information sent by a first device, where the capability information indicates a maximum frequency domain interval that is between a first frequency domain resource and a second frequency domain resource and that is supported by the first device; the second device sends, on the first frequency domain resource, downlink data to the first device; and the second device receives, on the second frequency domain resource, uplink data sent by the first device through backscatter communication, where a frequency domain interval between the first frequency domain resource and the second frequency domain resource is less than or equal to the maximum frequency domain interval.

In a possible implementation, the method further includes: The second device sends configuration information to the first device, where the configuration information includes frequency domain interval information, and the frequency domain interval information indicates the frequency domain interval between the first frequency domain resource and the second frequency domain resource.

For beneficial effect of the communication method provided in the sixth aspect and the possible implementations of the sixth aspect, refer to beneficial effect brought by the first aspect and the possible implementations of the first aspect. Details are not described herein again.

According to a seventh aspect, an embodiment of this application provides a communication apparatus, including: a processing unit, configured to determine a time domain resource starting from a start location of communication, where the time domain resource includes a first time domain resource and a second time domain resource, there is at an interval of a first interval duration between the first time domain resource and the second time domain resource, a time domain length of the first time domain resource is related to a first transmission duration, and a time domain length of the second time domain resource is a second transmission duration; and a transceiver unit, configured to communicate with a second device on the time domain resource.

In a possible implementation, the first transmission duration is the same as the second transmission duration.

In a possible implementation, the first transmission duration is different from the second transmission duration.

In a possible implementation, the time domain resource further includes a third time domain resource, there is at an interval of a second interval duration between the second time domain resource and the third time domain resource, a time domain length of the third time domain resource is related to the first transmission duration, and the second interval duration is different from the first interval duration.

In a possible implementation, a start time domain location of the first time domain resource is an offset location or the start location of the communication, and the offset location is determined based on an offset and the start location of the communication.

In a possible implementation, the offset location is equal to a sum of the offset and the start location of the communication.

In a possible implementation, the transceiver unit is further configured to receive configuration information sent by the second device, where the configuration information includes the first transmission duration and/or the first interval duration.

In a possible implementation, the configuration information further includes the second transmission duration.

In a possible implementation, the configuration information further includes a second interval duration, and the second interval duration is different from the first interval duration.

In a possible implementation, the configuration information further includes an offset, and the offset is used to determine a start time domain location of the first time domain resource.

In a possible implementation, both the first time domain resource and the second time domain resource include at least one of an uplink slot, an uplink symbol, a flexible slot, and a flexible symbol, and a resource between the first time domain resource and the second time domain resource includes at least one of a downlink slot, a downlink symbol, a flexible slot, and a flexible symbol; or both the first time domain resource and the second time domain resource include at least one of a downlink slot, a downlink symbol, a flexible slot, and a flexible symbol, and a resource between the first time domain resource and the second time domain resource includes at least one of an uplink slot, an uplink symbol, a flexible slot, and a flexible symbol.

In a possible implementation, the transceiver unit is specifically configured to: receive, on the time domain resource and a first frequency domain resource, downlink data sent by the second device; and send, on the time domain resource and a second frequency domain resource, uplink data to the second device through backscatter communication, where there is a frequency domain interval between the first frequency domain resource and the second frequency domain resource.

In a possible implementation, the time domain resource includes at least one of an uplink slot, an uplink symbol, a flexible slot, and a flexible symbol on the first frequency domain resource, and the time domain resource includes at least one of a downlink slot, a downlink symbol, a flexible slot, and a flexible symbol on the second frequency domain resource; or the time domain resource includes at least one of a downlink slot, a downlink symbol, a flexible slot, and a flexible symbol on the first frequency domain resource, and the time domain resource includes at least one of an uplink slot, an uplink symbol, a flexible slot, and a flexible symbol on the second frequency domain resource.

In a possible implementation, the transceiver unit is further configured to receive frequency domain interval information sent by the second device, where the frequency domain interval information indicates the frequency domain interval between the first frequency domain resource and the second frequency domain resource.

In a possible implementation, the processing unit is further configured to: when a preset timer expires, determine that the configuration information is invalid; or when a preset timer does not expire, determine that the configuration information is valid.

In a possible implementation, the transceiver unit is further configured to send capability information to the second device, where the capability information indicates a maximum frequency domain interval that is between the first frequency domain resource and the second frequency domain resource and that is supported by the first device.

For beneficial effect of the communication apparatus provided in the seventh aspect and the possible implementations of the seventh aspect, refer to beneficial effect brought by the first aspect and the possible implementations of the first aspect. Details are not described herein again.

According to an eighth aspect, an embodiment of this application provides a communication apparatus, including: a processing unit, configured to determine a time domain resource starting from a start location of communication, where the time domain resource includes a first time domain resource and a second time domain resource, there is at an interval of a first interval duration between the first time domain resource and the second time domain resource, a time domain length of the first time domain resource is related to a first transmission duration, and a time domain length of the second time domain resource is a second transmission duration; and a transceiver unit, configured to communicate with a first device on the time domain resource.

In a possible implementation, the first transmission duration is the same as the second transmission duration.

In a possible implementation, the first transmission duration is different from the second transmission duration.

In a possible implementation, the time domain resource further includes a third time domain resource, there is at an interval of a second interval duration between the second time domain resource and the third time domain resource, a time domain length of the third time domain resource is related to the first transmission duration, and the second interval duration is different from the first interval duration.

In a possible implementation, a start time domain location of the first time domain resource is an offset location or the start location of the communication, and the offset location is determined based on an offset and the start location of the communication.

In a possible implementation, the offset location is equal to a sum of the offset and the start location of the communication.

In a possible implementation, the transceiver unit is further configured to send configuration information to the first device, where the configuration information includes the first transmission duration and/or the first interval duration.

In a possible implementation, the configuration information further includes the second transmission duration.

In a possible implementation, the configuration information further includes a second interval duration, and the second interval duration is different from the first interval duration.

In a possible implementation, the configuration information further includes an offset, and the offset is used to determine a start time domain location of the first time domain resource.

In a possible implementation, both the first time domain resource and the second time domain resource include at least one of an uplink slot, an uplink symbol, a flexible slot, and a flexible symbol, and a resource between the first time domain resource and the second time domain resource includes at least one of a downlink slot, a downlink symbol, a flexible slot, and a flexible symbol; or both the first time domain resource and the second time domain resource include at least one of a downlink slot, a downlink symbol, a flexible slot, and a flexible symbol, and a resource between the first time domain resource and the second time domain resource includes at least one of an uplink slot, an uplink symbol, a flexible slot, and a flexible symbol.

In a possible implementation, the transceiver unit is specifically configured to: send, on the time domain resource and a first frequency domain resource, downlink data to the first device; and receive, on the time domain resource and a second frequency domain resource, uplink data sent by the first device through backscatter communication, where there is a frequency domain interval between the first frequency domain resource and the second frequency domain resource.

In a possible implementation, the time domain resource includes at least one of an uplink slot, an uplink symbol, a flexible slot, and a flexible symbol on the first frequency domain resource, and the time domain resource includes at least one of a downlink slot, a downlink symbol, a flexible slot, and a flexible symbol on the second frequency domain resource; or the time domain resource includes at least one of a downlink slot, a downlink symbol, a flexible slot, and a flexible symbol on the first frequency domain resource, and the time domain resource includes at least one of an uplink slot, an uplink symbol, a flexible slot, and a flexible symbol on the second frequency domain resource.

In a possible implementation, the transceiver unit is further configured to send frequency domain interval information to the first device, where the frequency domain interval information indicates the frequency domain interval between the first frequency domain resource and the second frequency domain resource.

In a possible implementation, the transceiver unit is further configured to receive capability information sent by the first device, where the capability information indicates a maximum frequency domain interval that is between the first frequency domain resource and the second frequency domain resource and that is supported by the first device.

For beneficial effect of the communication apparatus provided in the eighth aspect and the possible implementations of the eighth aspect, refer to beneficial effect brought by the first aspect and the possible implementations of the first aspect. Details are not described herein again.

According to a ninth aspect, an embodiment of this application provides a communication apparatus, including a transceiver unit, configured to receive first time-frequency resource configuration information and second time-frequency resource configuration information that are sent by a second device, where the first time-frequency resource configuration information is used to configure a first frequency domain resource and a time domain resource corresponding to the first frequency domain resource, and the second time-frequency resource configuration information is used to configure a second frequency domain resource and/or a time domain resource corresponding to the second frequency domain resource. The transceiver unit communicates with the second device through backscatter communication on the first frequency domain resource and the time domain resource corresponding to the first frequency domain resource, and/or the second frequency domain resource and the time domain resource corresponding to the second frequency domain resource; the time domain resource corresponding to the first frequency domain resource and the time domain resource corresponding to the second frequency domain resource each include at least one first time unit, the first time unit is of a first resource type on the time domain resource corresponding to the first frequency domain resource, and the first time unit is of a second resource type on the time domain resource corresponding to the second frequency domain resource; and the first time unit of the first resource type includes an uplink slot, a flexible slot, an uplink symbol, or a flexible symbol, and the first time unit of the second resource type includes a downlink slot, a flexible slot, a downlink symbol, or a flexible symbol.

In a possible implementation, first proportions respectively corresponding to the first frequency domain resource and the second frequency domain resource are the same, and the first proportion is a ratio of a quantity of time units corresponding to the first resource type to a quantity of time units corresponding to the second resource type in a same duration; or first proportions respectively corresponding to the first frequency domain resource and the second frequency domain resource are reciprocal of each other; or all time units corresponding to the first frequency domain resource are of the first resource type, and all time units corresponding to the second frequency domain resource are of the second resource type; or all time units corresponding to the first frequency domain resource are of a same resource type, and all time units corresponding to the second frequency domain resource are of different resource types; or all time units corresponding to the first frequency domain resource are of different resource types, and all time units corresponding to the second frequency domain resource are of a same resource type.

In a possible implementation, a processing unit is specifically configured to determine, based on the time domain resource corresponding to the first frequency domain resource, the time domain resource corresponding to the second frequency domain resource.

In a possible implementation, the second time-frequency resource configuration information includes frequency domain interval information or configuration information of the second frequency domain resource, and the frequency domain interval information indicates a frequency domain interval between the second frequency domain resource and the first frequency domain resource.

In a possible implementation, the transceiver unit is further configured to send capability information to the second device, where the capability information indicates a maximum frequency domain interval that is between the first frequency domain resource and the second frequency domain resource and that is supported by the first device.

In a possible implementation, any time-frequency resource configuration information includes a first transmission duration and/or a first interval duration, a time domain resource configured by using the time-frequency resource configuration information includes a first time domain resource and a second time domain resource, there is the first interval duration between the first time domain resource and the second time domain resource, and both a time domain length of the first time domain resource and a time domain length of the second time domain resource are the first transmission duration.

In a possible implementation, the time-frequency resource configuration information further includes a second transmission duration, and the time domain length of the second time domain resource is the second transmission duration.

In a possible implementation, the time-frequency resource configuration information further includes a second interval duration, the time domain resource configured by using the time-frequency resource configuration information further includes a third time domain resource, and there is the second interval duration between the second time domain resource and the third time domain resource.

In a possible implementation, the time-frequency resource configuration information further includes an offset, and the offset is used to determine a start time domain location of the first time domain resource.

For beneficial effect of the communication apparatus provided in the ninth aspect and the possible implementations of the ninth aspect, refer to beneficial effect brought by the first aspect and the possible implementations of the first aspect. Details are not described herein again.

According to a tenth aspect, an embodiment of this application provides a communication apparatus, including a transceiver unit, configured to send first time-frequency resource configuration information and second time-frequency resource configuration information to a first device, where the first time-frequency resource configuration information is used to configure a first frequency domain resource and a time domain resource corresponding to the first frequency domain resource, and the second time-frequency resource configuration information is used to configure a second frequency domain resource and/or a time domain resource corresponding to the second frequency domain resource. The transceiver unit is further configured to communicate with the first device through backscatter communication on the first frequency domain resource and the time domain resource corresponding to the first frequency domain resource, and/or the second frequency domain resource and the time domain resource corresponding to the second frequency domain resource; the time domain resource corresponding to the first frequency domain resource and the time domain resource corresponding to the second frequency domain resource each include at least one first time unit, the first time unit is of a first resource type on the time domain resource corresponding to the first frequency domain resource, and the first time unit is of a second resource type on the time domain resource corresponding to the second frequency domain resource; and the first time unit of the first resource type includes an uplink slot, a flexible slot, an uplink symbol, or a flexible symbol, and the first time unit of the second resource type includes a downlink slot, a flexible slot, a downlink symbol, or a flexible symbol.

In a possible implementation, first proportions respectively corresponding to the first frequency domain resource and the second frequency domain resource are the same, and the first proportion is a ratio of a quantity of time units corresponding to the first resource type to a quantity of time units corresponding to the second resource type in a same duration; or first proportions respectively corresponding to the first frequency domain resource and the second frequency domain resource are reciprocal of each other; or all time units corresponding to the first frequency domain resource are of the first resource type, and all time units corresponding to the second frequency domain resource are of the second resource type; or all time units corresponding to the first frequency domain resource are of a same resource type, and all time units corresponding to the second frequency domain resource are of different resource types; or all time units corresponding to the first frequency domain resource are of different resource types, and all time units corresponding to the second frequency domain resource are of a same resource type.

In a possible implementation, a processing unit is specifically configured to determine, based on the time domain resource corresponding to the first frequency domain resource, the time domain resource corresponding to the second frequency domain resource.

In a possible implementation, the second time-frequency resource configuration information includes frequency domain interval information or configuration information of the second frequency domain resource, and the frequency domain interval information indicates a frequency domain interval between the second frequency domain resource and the first frequency domain resource.

In a possible implementation, the transceiver unit is further configured to receive capability information sent by the first device, where the capability information indicates a maximum frequency domain interval that is between the first frequency domain resource and the second frequency domain resource and that is supported by the first device.

In a possible implementation, any time-frequency resource configuration information includes a first transmission duration and/or a first interval duration, a time domain resource configured by using the time-frequency resource configuration information includes a first time domain resource and a second time domain resource, there is the first interval duration between the first time domain resource and the second time domain resource, and both a time domain length of the first time domain resource and a time domain length of the second time domain resource are the first transmission duration.

In a possible implementation, the time-frequency resource configuration information further includes a second transmission duration, and the time domain length of the second time domain resource is the second transmission duration.

In a possible implementation, the time-frequency resource configuration information further includes a second interval duration, the time domain resource configured by using the time-frequency resource configuration information further includes a third time domain resource, and there is the second interval duration between the second time domain resource and the third time domain resource.

In a possible implementation, the time-frequency resource configuration information further includes an offset, and the offset is used to determine a start time domain location of the first time domain resource.

For beneficial effect of the communication apparatus provided in the tenth aspect and the possible implementations of the tenth aspect, refer to beneficial effect brought by the first aspect and the possible implementations of the first aspect. Details are not described herein again.

According to an eleventh aspect, an embodiment of this application provides a communication apparatus, including a transceiver unit, configured to send capability information to a second device, where the capability information indicates a maximum frequency domain interval that is between a first frequency domain resource and a second frequency domain resource and that is supported by the first device; the transceiver unit receives, on the first frequency domain resource, downlink data sent by the second device; and the transceiver unit sends, on the second frequency domain resource, uplink data to the second device through backscatter communication, where a frequency domain interval between the first frequency domain resource and the second frequency domain resource is less than or equal to the maximum frequency domain interval.

In a possible implementation, the transceiver unit is further configured to receive configuration information sent by the second device, where the configuration information includes frequency domain interval information, and the frequency domain interval information indicates the frequency domain interval between the first frequency domain resource and the second frequency domain resource.

For beneficial effect of the communication apparatus provided in the eleventh aspect and the possible implementations of the eleventh aspect, refer to beneficial effect brought by the first aspect and the possible implementations of the first aspect. Details are not described herein again.

According to a twelfth aspect, an embodiment of this application provides a communication apparatus, including a transceiver unit, configured to receive capability information sent by a first device, where the capability information indicates a maximum frequency domain interval that is between a first frequency domain resource and a second frequency domain resource and that is supported by the first device; the transceiver unit sends, on the first frequency domain resource, downlink data to the first device; and the transceiver unit receives, on the second frequency domain resource, uplink data sent by the first device through backscatter communication, where a frequency domain interval between the first frequency domain resource and the second frequency domain resource is less than or equal to the maximum frequency domain interval.

In a possible implementation, the transceiver unit is further configured to send configuration information to the first device, where the configuration information includes frequency domain interval information, and the frequency domain interval information indicates the frequency domain interval between the first frequency domain resource and the second frequency domain resource.

For beneficial effect of the communication apparatus provided in the twelfth aspect and the possible implementations of the twelfth aspect, refer to beneficial effect brought by the first aspect and the possible implementations of the first aspect. Details are not described herein again.

According to a thirteenth aspect, an embodiment of this application provides a communication device, including a processor and a memory. The memory is configured to store a computer program, and the processor is configured to invoke and run the computer program stored in the memory, to perform the method in the first aspect, the second aspect, the third aspect, the fourth aspect, the fifth aspect, the sixth aspect, or the possible implementations.

According to a fourteenth aspect, an embodiment of this application provides a chip, including a processor, configured to invoke computer instructions from a memory and run the computer instructions, so that a device in which the chip is installed performs the method in the first aspect, the second aspect, the third aspect, the fourth aspect, the fifth aspect, the sixth aspect, or the possible implementations.

According to a fifteenth aspect, an embodiment of this application provides a computer-readable storage medium, configured to store computer program instructions. The computer program enables a computer to perform the method in the first aspect, the second aspect, the third aspect, the fourth aspect, the fifth aspect, the sixth aspect, or the possible implementations.

According to a sixteenth aspect, an embodiment of this application provides a computer program product, including computer program instructions. The computer program instructions enable a computer to perform the method in the first aspect, the second aspect, the third aspect, the fourth aspect, the fifth aspect, the sixth aspect, or the possible implementations.

According to a seventeenth aspect, an embodiment of this application provides an apparatus, including a logic circuit and an input/output interface. The input/output interface is configured to receive a signal from a communication apparatus other than the apparatus and transmit the signal to the logic circuit, or send a signal from the logic circuit to a communication apparatus other than the apparatus. The logic circuit is configured to execute code instructions to implement the method in the first aspect, the second aspect, the third aspect, the fourth aspect, the fifth aspect, the sixth aspect, or the possible implementations.

According to an eighteenth aspect, an embodiment of this application provides a terminal, including the apparatus in the seventh aspect, the eighth aspect, the ninth aspect, the tenth aspect, the eleventh aspect, the twelfth aspect, or the possible implementations.

### BRIEF DESCRIPTION OF DRAWINGS

FIG. 1 is a communication system applicable to an embodiment of this application;
FIG. 2a is a schematic diagram of an RFID communication system according to this application;
FIG. 2b is a schematic diagram of an RFID communication system with a distributed architecture according to this application;
FIG. 2c is a schematic diagram of an RFID communication system with a centralized architecture according to this application;
FIG. 3a is a schematic diagram of WUR communication according to this application;
FIG. 3b is a schematic diagram of other WUR communication according to this application;
FIG. 4 is a schematic diagram of envelope detection according to this application;
FIG. 5 is a schematic diagram of backscatter communication according to this application;
FIG. 6 is a schematic interaction flowchart of a communication method 400 according to an embodiment of this application;
FIG. 7a is a schematic diagram of a time domain resource according to an embodiment of this application;
FIG. 7b is a schematic diagram of another time domain resource according to an embodiment of this application;
FIG. 8a is a schematic diagram of another time domain resource according to an embodiment of this application;
FIG. 8b is a schematic diagram of another time domain resource according to an embodiment of this application;
FIG. 9 is a schematic interaction flowchart of a communication method 500 according to an embodiment of this application;
FIG. 10 is a schematic interaction flowchart of a communication method 600 according to an embodiment of this application;
FIG. 11a is a schematic diagram of a time frequency resource according to an embodiment of this application;
FIG. 11b is a schematic diagram of another time frequency resource according to an embodiment of this application;
FIG. 11c is a schematic diagram of another time frequency resource according to an embodiment of this application;
FIG. 11d is a schematic diagram of another time frequency resource according to an embodiment of this application;
FIG. 12 is a schematic diagram of an inventory process according to an embodiment of this application;
FIG. 13 is a schematic block diagram of a communication apparatus according to an embodiment of this application; and
FIG. 14 is another schematic block diagram of a communication apparatus according to an embodiment of this application.

### DESCRIPTION OF EMBODIMENTS

The following describes the technical solutions in this application with reference to the accompanying drawings.

The communication method provided in this application may be applied to various communication systems, for example, a global system for mobile communications (Global System for Mobile Communications, GSM), a code division multiple access (Code Division Multiple Access, CDMA) system, and a wideband code division multiple access (Wideband Code Division Multiple Access, WCDMA) system, a general packet radio service (General Packet Radio Service, GPRS), a long term evolution (Long Term Evolution, LTE) system, an advanced long term evolution (Advanced long term evolution, LTE-A) system, a new radio (New Radio, NR) system, an evolved system of the NR system, an LTE-based access to unlicensed spectrum (LTE-based access to unlicensed spectrum, LTE-U) system, an NR-based access to unlicensed spectrum (NR-based access to unlicensed spectrum, NR-U) system, and a non-terrestrial network (Non-Terrestrial Network, NTN) system, a universal mobile telecommunications system (Universal Mobile Telecommunications System, UMTS), a wireless local area network (Wireless Local Area Networks, WLAN), wireless fidelity (Wireless Fidelity, Wi-Fi), a 5th generation (5th-Generation, 5G) communication system or another communication system.

In some embodiments, the communication system in embodiments of this application may be applied to a carrier aggregation (Carrier Aggregation, CA) scenario, may be applied to a dual connectivity (Dual Connectivity, DC) scenario, or may be applied to a standalone (Standalone, SA) network deployment scenario.

Embodiments of this application are described with reference to a network device and a terminal device. The terminal device may also be referred to as user equipment (User Equipment, UE), an access terminal, a subscriber unit, a subscriber station, a mobile station, a mobile console, a remote station, a remote terminal, a mobile device, a user terminal, a terminal, a wireless communication device, a user agent, or a user apparatus, or the like.

The terminal device may be a station (STATION, STA) in a WLAN, may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA) device, a handheld device having a wireless communication function, a computing device, another processing device connected to a wireless modem, a vehicle-mounted device, a wearable device, a terminal device in a next generation communication system, for example, an NR network, or a terminal device in a future evolved public land mobile network (Public Land Mobile Network, PLMN).

In embodiments of this application, the terminal device may be deployed on land, including an indoor device, an outdoor device, a handheld device, a wearable device, or a vehicle-mounted device; or may be deployed on a water surface (for example, on a steamboat); or may be deployed in the air (for example, on a plane, a balloon, or a satellite).

In embodiments of this application, the terminal device may be a mobile phone (mobile phone), a tablet computer (Pad), a computer having a wireless transceiver function, a virtual reality (virtual reality, VR) terminal device, an augmented reality (augmented reality, AR) terminal device, a wireless terminal device in industrial control (industrial control), a wireless terminal device in self driving (self driving), a wireless terminal device in remote medical (remote medical), a wireless terminal device in a smart grid (smart grid), a wireless terminal device in transportation safety (transportation safety), a wireless terminal device in a smart city (smart city), a wireless terminal device in a smart home (smart home), or the like.

As an example instead of a limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that are dedicated to only one type of application function and need to work with other devices such as smartphones, such as various smart bands or smart jewelry for monitoring physical signs.

In embodiments of this application, the network device may be a device configured to communicate with a mobile device. The network device may be an access point (access point, AP) in a WLAN, or a base transceiver station (Base Transceiver Station, BTS) in GSM or CDMA, or may be a NodeB (NodeB, NB) in WCDMA, or further may be an evolved NodeB (evolved NodeB, eNB or eNodeB) in LTE, or a relay station or an access point, or a vehicle-mounted device, a wearable device, a network device or a base station (gNB) in an NR network, a network device in a future evolved PLMN network, a network device in an NTN network, or the like.

As an example instead of a limitation, in embodiments of this application, the network device may have a mobility characteristic, for example, the network device may be a mobile device. In some embodiments, the network device may be a satellite or a balloon station. For example, the satellite may be a low earth orbit (low earth orbit, LEO) satellite, a medium earth orbit (medium earth orbit, MEO) satellite, a geostationary earth orbit (geostationary earth orbit, GEO) satellite, or a high elliptical orbit (High Elliptical Orbit, HEO) satellite. In some embodiments, the network device may alternatively be a base station disposed at a location such as land or water.

In embodiments of this application, the network device may provide a service for a cell, and the terminal device communicates with the network device by using a transmission resource (for example, a frequency domain resource, or referred to as a spectrum resource) used by the cell. The cell may be a cell corresponding to the network device (for example, a base station). The cell may belong to a macro base station, or may belong to a base station corresponding to a small cell (small cell). The small cell herein may include: a metro cell (Metro cell), a micro cell (Micro cell), a picocell (Picocell), a femtocell (Femtocell), and the like. These small cells have characteristics of a small coverage area and low transmit power, and are suitable to provide a high-rate data transmission service.

It should be understood that specific forms of the network device and the terminal device are not limited in this application.

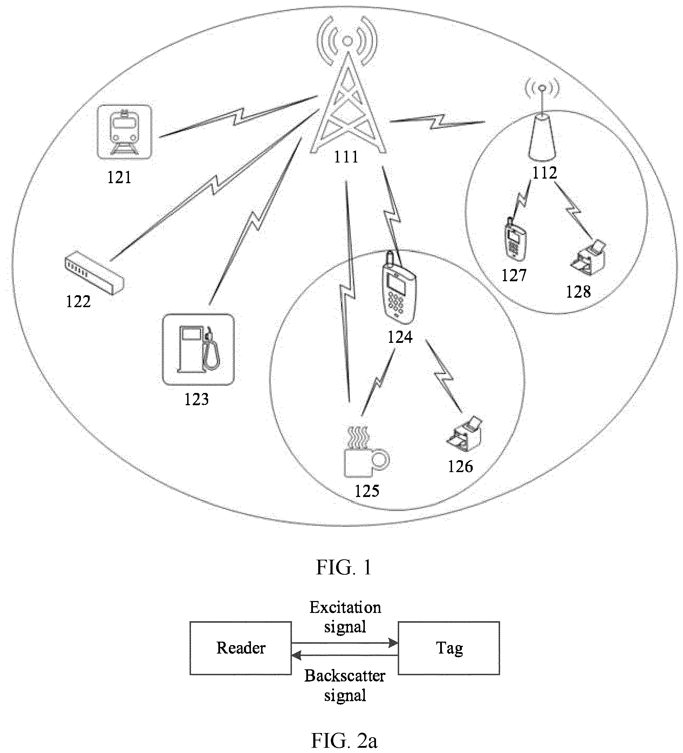

For ease of understanding of embodiments of this application, a communication system applicable to embodiments of this application is first described in detail with reference to FIG. 1. FIG. 1 is a schematic diagram of a communication system applicable to a communication method according to an embodiment of this application. As shown in FIG. 1, the communication system 100 may include a network device and a terminal device. There may be one or more network devices and terminal devices, for example, network devices 111 and 112 and terminal devices 121 to 128 shown in FIG. 1. In the communication system 100, the network device 111 may communicate with one or more of the terminal devices 121 to 126 through a radio air interface, and the network device 111 may communicate with one or more of the terminal devices 127 and 128 through the network device 112. In addition, the terminal devices 124 to 126 may form a communication system 101. In the communication system 101, the terminal device 124 may communicate with one or more of the terminal devices 125 and 126 through a radio air interface. The network device 112 and the terminal devices 127 and 128 may form a communication system 102. In the communication system 102, the network device 112 may communicate with one or more of the terminal devices 127 and 128 through a radio air interface.

It should be understood that the communication system 101 may be a subsystem of the communication system 100, or may be a communication system independent of the communication system 100. The communication system 102 may be a subsystem of the communication system 100, or may be a communication system independent of the communication system 100.

It should be further understood that FIG. 1 is merely an example of showing two network devices and eight terminal devices in the communication system 100, three terminal devices in the communication system 101, and one network device and two terminal devices in the communication system 102. However, this shall not constitute any limitation on this application. Any one of the foregoing communication systems may include more or fewer network devices, or include more or fewer terminal devices. This is not limited in embodiments of this application.

With popularization of MTC and internet of things (internet of things, IoT) communication in a 5G NR system, increasingly more IoT devices have been deployed in lives of people, for example, devices that are targeted at sensing and data collection in smart water meters, shared bicycles, smart cities, environment monitoring, smart homes, forest fire prevention, and the like. In the future, IoT devices are to be ubiquitous, and may be embedded in clothes, packages, and keys. Almost all offline objects are to be online with enablement of the internet of things technology. However, the IoT devices are widely distributed and a large quantity of IoT devices are deployed. Therefore, a process of implementing internet of everything brings great challenges to the industry, especially a power supply problem. Currently, the IoT is still mainly promoted by an operator. An IoT module needs to use a standard cellular protocol to communicate with a base station. Because the base station needs to cover as large an area as possible, the IoT module needs to be able to perform communication when being far away from the base station. Therefore, an IoT device still needs to consume a current of up to 30 mA during wireless communication. Therefore, a current IoT module still needs to use a battery with a high capacity to work. Consequently, it is difficult to make the IoT module small, and costs of the IoT device are increased.

In addition, some low-power-consumption terminals play an important role in internet of things applications such as medical care, smart homes, industrial sensors, and wearable devices. However, due to a limited size of such terminals, it is difficult to prolong running time of these devices by simply increasing a battery capacity. Therefore, to prolong a terminal battery life, power consumption of wireless communication needs to be reduced. A radio transceiver is one of the most power-consuming components.

Therefore, to further popularize the IoT and implant the IoT module into a human body or a smaller object, it is no longer possible to match a higher-capacity battery. It is necessary to use a smaller battery, or even completely get rid of battery limitations, or to design a method for reducing power consumption of a radio transceiver to overcome limitations such as costs, a size, and power consumption of the IoT device. Therefore, in June 2021, 3GPP organized a seminar on potential research directions for R18, discussed internet of things enhancement technologies, and disclosed that 5G-Advanced (5G-Advanced) was to introduce passive IoT and WUR in a 5G NR system starting from R18. The Passive IoT is developed based on a large quantity of mature RFID technologies. Because a power module is not required, a size of a passive RFID product can reach a centimeter level or even smaller. In addition, the passive RFID product has a simple structure, low costs, low failure rate, and long service life.

The following first describes the RFID technology and the WUR technology.
1. RFID technology: a non-contact automatic identification technology, which can automatically identify a target object and obtain related data by using a radio frequency signal.

Generally, an RFID system includes a reader (reader) and a tag (tag). With reference to FIG. 2a, the reader sends an excitation signal to the tag to provide energy to the tag, and the tag receives signaling sent by the reader, and sends a backscatter signal to the reader through backscatter communication. In this way, the reader can identify an identity (identity, ID) of the tag and perform operations such as reading and writing on the tag.

It should be noted that, the excitation signal sent by the reader to the tag may be one of downlink data or downlink data in the following, and the backscatter signal may be one of the uplink data or the uplink data in the following. The downlink data is a contiguous carrier, and the tag sends the backscatter signal to the reader in the manner of backscatter communication. Specifically, the tag transmits the uplink data by using a carrier provided by the downlink data.

Currently, to extend an effective working distance of the RFID, the following two manners are generally used.

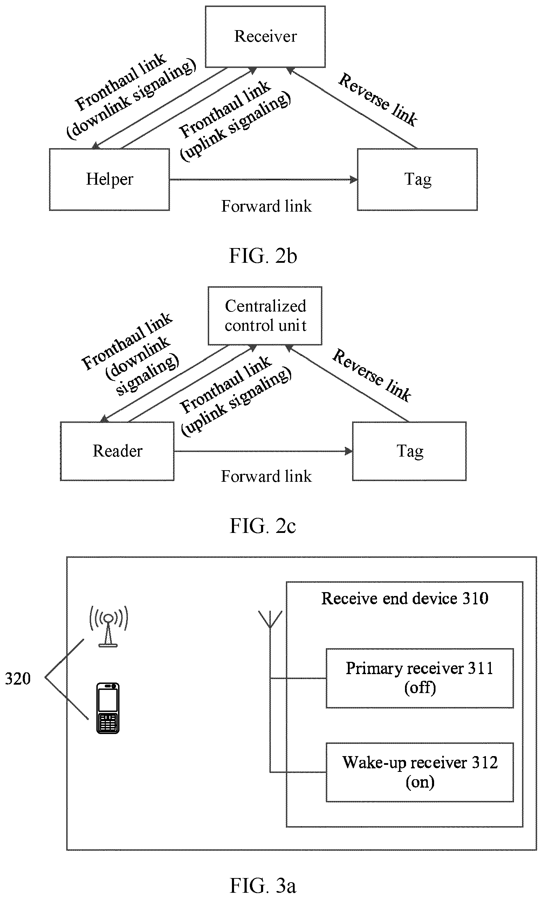

Manner 1: Distributed architecture: With reference to FIG. 2b, a distributed reader includes a helper (helper) and a receiver (receiver). The helper sends an excitation signal to the tag through a forward link, and the receiver receives a backscatter signal from the tag through a reverse link. In addition, the receiver generates RFID-related downlink signaling and sends the downlink signaling to the helper through the fronthaul link, and the helper then forwards the downlink signaling through the forward link.

Manner 2: Centralized or integrated architecture: With reference to FIG. 2c, in addition to signal excitation and signal backscatter between the reader and the tag through the forward link and the reverse link, the reader further communicates with a centralized control unit (for example, a base station), and the centralized control unit may schedule and control resources and sending behavior of the forward link used by the reader.

In embodiments of this application, to support the RFID in the NR system, the helper and the receiver in Manner 1 and the reader and the centralized control unit in Manner 2 may communicate with each other by using the NR technology.

2. WUR technology: After high-power-consumption primary connection radio (primary connection radio, PCR) that may also be referred to as a primary receiver enters a sleep state, low-power-consumption companion radio (Companion Radio) that is also referred to as a wake-up receiver (WUR) is used to listen to a wake-up frame sent by an AP, and wake up the PCR after listening to and obtain the wake-up frame.

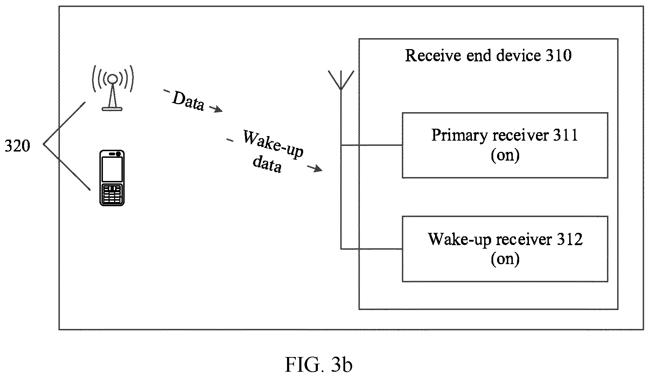

With reference to FIG. 3a, a primary receiver 311 and a wake-up receiver 312 are deployed in a receive end device 310. When a transmit end device 320 (for example, an AP or a terminal device) does not send data, the primary receiver is turned off, which is also referred to as being in a sleep state, and the wake-up receiver is turned on. With reference to FIG. 3b, when the transmit end device 320 sends data, the transmit end device 320 first sends wake-up data (for example, the foregoing wake-up frame), and the receive end device 310 activates the primary receiver 312 after receiving the wake-up data by using the wake-up receiver 311, so that the primary receiver is turned on, which is also referred to as being in an active state. In this case, the receive end device 310 receives, by using the primary receiver 311, data sent by the transmit end device 320 after the wake-up data.

It should be noted that information bit of the wake-up receiver is modulated into on-off keying (on-off keying, OOK) symbols, and the transmit end device uses these OOK symbols to shield a generated narrowband orthogonal frequency division multiplexing (orthogonal frequency division multiplexing, OFDM) waveform (that is, an OOK waveform), to further optimize the OOK waveform. The OOK symbols are carried on 13 subcarriers, and are referred to as multi-carrier (multi-carrier, MC) OOK in the wireless local area network standard IEEE 802.11ba defined by the Institute of Electrical and Electronics Engineers (institute of electrical and electronics engineers, IEEE). On the receive end device side, OOK demodulation does not require any channel equalization in frequency domain and time domain. Therefore, the receive end device performs non-coherent detection (for example, envelope detection) by using the wake-up receiver to perform listening. When non-coherent detection is used, the receive end device does not need to maintain/track a high-precision oscillation rate. Therefore, a phase-locked loop can be avoided, and power consumption on a receiving side can be further reduced.

It should be understood that the OOK symbol is merely an example of the WUR wake-up frame, and does not constitute any limitation on this application.

The RFID technology applied to the NR system may be, for example, referred to as passive (Passive) IoT. A transmission mechanism of the passive IoT provided in this application is similar to that of the RFID. In the passive IoT, a passive IoT device (for example, a tag) may be passive (Batter Free). In other words, the passive IoT device is not equipped with or does not mainly rely on a battery or a wired power supply for power supply. However, that the passive IoT device does not have a power module does not mean that the passive IoT device does not need to use power. The passive IoT device may obtain energy from ambient light, heat, and radio frequency, to support sensing, wireless transmission, distributed computing, and the like of the data of the internet of things. The passive IoT device may alternatively be a passive energy storage device, or may be a semi-passive device. The passive energy storage device has an energy storage device. The semi-passive device has a battery, but the battery only supplies power for providing auxiliary support for a circuit that requires power supply to maintain data and that is in the tag or a voltage required for working of a chip in the tag and supplies power to a tag circuit that consumes little power, so that a battery size is small.

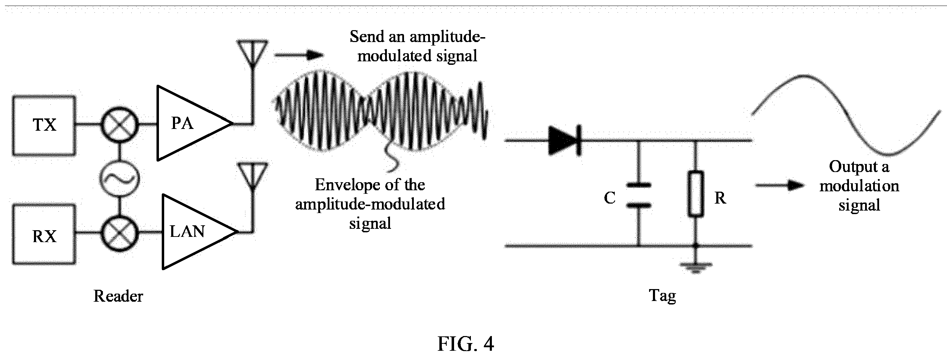

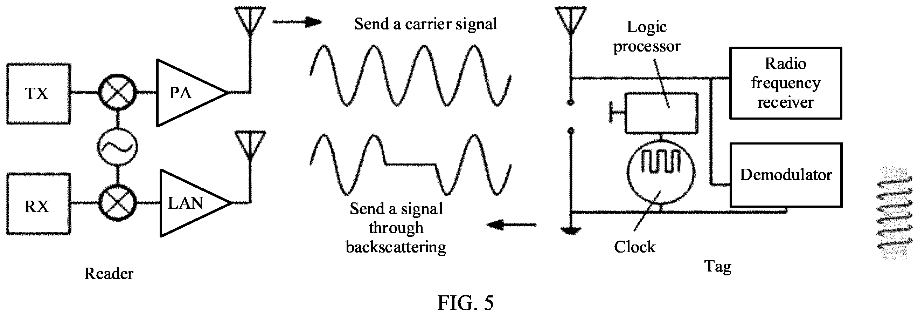

FIG. 4 and FIG. 5 show examples of schematic diagrams of uplink and downlink communication methods in passive IoT communication.

FIG. 4 shows an example of a schematic diagram of a downlink communication method in passive IoT communication.

A tag sends an amplitude-modulated signal to a reader through a downlink. The tag receives the amplitude-modulated signal and may use an envelope detector to perform envelope detection on the amplitude-modulated signal to obtain a low-frequency signal in the amplitude-modulated signal. Main components of the envelope detector include a diode and a resistor-capacitor circuit (resistor-capacitance circuit, RC) shown in FIG. 4, that is, an oscillation circuit.

The foregoing envelope detection refers to a process of demodulating a low-frequency signal from an amplitude-modulated signal. In a broad sense, the detection is generally referred to as demodulation, and is an inverse process of modulation, that is, a process of extracting a modulation signal from a modulated signal. For the amplitude-modulated signal, the envelope detection is a process of extracting a modulation signal from amplitude change of the amplitude-modulated signal. An envelope is an amplitude change curve reflecting a high-frequency signal. When a low-frequency signal is used to perform amplitude modulation on a high-frequency signal, the low-frequency signal becomes an envelope of the high-frequency signal.

It may be understood that a structure of an envelope detection circuit shown in FIG. 4 is a schematic diagram of a structure of a most conventional basic circuit. An evolved structure of the envelope detection circuit is not described herein. A structure of the envelope detection circuit used by the tag is not limited in embodiments of this application.

FIG. 5 shows an example of a schematic diagram of an uplink communication method in passive IoT communication.

A tag cannot provide power supply and cannot be connected to a wired power supply for the tag to perform data transmission. Therefore, the tag needs to obtain energy from an external environment to enable the tag to perform data transmission and other operations such as data processing.

Specifically, when receiving a carrier signal sent by a reader, the tag may drive, by using energy obtained from an electromagnetic field generated in space, a chip to transmit information stored in the tag.

In the foregoing implementation method, a relationship between the reader and the tag is an "electromagnetic backscattering coupling" relationship, where the "electromagnetic backscattering coupling" means that, by using a spatial propagation rule of an electromagnetic wave, after a transmitted electromagnetic wave contacts a measured object, the transmitted electromagnetic wave carrying information about the measured object is backscattered. This coupling is suitable for a long-distance radio frequency identification system working in high frequencies and microwaves.

It may be understood that uplink communication method in the passive IoT communication shown in FIG. 5 is merely an example. In some other embodiments of this application, the tag may further drive, by obtaining energy such as ambient light and heat, the chip to transmit information stored in the tag. As described above, the tag may also be a passive energy storage device or a semi-passive device.

A problem that exists when the passive IoT device performs communication in the NR system includes at least the following two aspects:

In one aspect, in NR, a network device (for example, a base station) periodically broadcasts timing information, and a terminal device may obtain the timing information (for example, a frame number or a slot number) at any time. In addition, crystal oscillator synchronization precision of the terminal device is high, and timing can be well maintained. Therefore, in the NR system, the terminal device may determine, based on a current slot number and a slot configuration (for example, a time division duplex (time division duplex, TDD) slot configuration or a frequency division duplex (frequency division duplex, FDD) slot configuration) that are received from the network device, whether a current slot is a downlink slot or an uplink slot. For the passive IoT, a reader sends downlink signaling to a tag on demand (on demand), and the tag has few opportunities to obtain timing. In addition, the tag has a weak synchronization capability and a poor timing maintenance capability. Therefore, for the passive IoT, in a manner in which the reader directly notifies a slot configuration, the tag cannot determine a receiving and sending resource based on timing synchronized with the reader, and therefore the tag cannot communicate with the reader in the NR system.

On the other hand, in the NR, the terminal device performs uplink transmission by using a carrier generated by the terminal device. In the passive IoT, uplink transmission of the tag is backscatter communication. In other words, the tag does not generate a carrier and uses a carrier provided by downlink data of the reader. The tag modulates and backscatters a received carrier to transmit data.

It should be understood that the passive IoT is merely an example name, and when the passive IoT is replaced with another description, the passive IoT also falls within the protection scope of this application.

It should be further understood that an information exchange procedure and a signaling format in the passive IoT scenario are merely examples instead of limiting descriptions.

For the WUR technology applied in the NR system, it should be noted that:

In NR, a network device (for example, a base station) periodically broadcasts timing information, and a terminal device, including a primary receiver in the terminal device, may obtain the timing information (for example, a frame number or a slot number) at any time. In addition, the terminal device has a good synchronization capability and can maintain timing well. Therefore, the terminal device may determine, based on a current slot number and a slot configuration (for example, a TDD slot configuration or an FDD slot configuration) that are received from the network device, whether a current slot is a downlink slot or an uplink slot. However, for a wake-up receiver, the network device sends downlink signaling to a WUR-enabled terminal device on demand (on demand), and the WUR-enabled terminal device has few opportunities to obtain timing. In addition, the wake-up receiver has a weak synchronization capability, and a poor timing maintenance capability. Therefore, for the WUR, in a manner in which the network device directly notifies a slot configuration, the wake-up receiver cannot determine a receiving and sending resource based on timing synchronized with the network device, and cannot communicate with the network device in the NR system.

It can be learned that, between a first device (for example, a tag or a wake-up receiver) and a second device (for example, a reader, an AP, or a transmit-side terminal device), how to determine a transmission resource in an NR system and transmit uplink data and/or downlink data on the transmission resource is a problem to be urgently resolved currently.

For the foregoing problem, an embodiment of this application provides a transmission resource determining solution, so that data transmission can be performed between a first device and a second device in an NR system.

For ease of understanding of embodiments of this application, the following descriptions are provided.

First, terms "first", "second", and various numbers in the following embodiments are merely used for differentiation for ease of description, and are not used to limit the scope of embodiments of this application. For example, different devices, time domain resources, frequency domain resources, interval duration, transmission duration, and the like are distinguished.

Second, "predefinition" may be implemented by prestoring corresponding code or a corresponding table in a device (for example, including a first device and a second device), or may be implemented in another manner that may be used to indicate related information. A specific implementation thereof is not limited in this application.

"Preconfiguration" may be implemented by prestoring corresponding code, a corresponding table, or another manner that may be used to indicate related information in a device (for example, including a first device and a second device), or may be implemented by using signaling preconfiguration. For example, a network device is implemented by using signaling preconfiguration. A specific implementation of preconfiguration is not limited in this application.

Third, "protocol" in embodiments of this application may be a standard protocol in the communication field, for example, including an LTE protocol, an NR protocol, and a related protocol applied to a future communication system. This is not limited in this application.

Fourth, "at least one" means one or more, and "a plurality of" means two or more. "And/or" describes an association relationship between associated objects, and represents that three relationships may exist. For example, A and/or B may represent the following cases: A exists alone, both A and B exist, and B exists alone, where A and B may be singular or plural.

Fifth, in embodiments of this application, descriptions such as "when" and "if" mean that a device (for example, a first device or a second device) performs corresponding processing in an objective situation, and are not intended to limit time, and the device (for example, the first device or the second device) is not required to perform a determining action during implementation, and do not mean any other limitation.

Sixth, in embodiments of this application, a first device determines a time domain resource, that is, selects the time domain resource. In the following, "determine" and "select" are alternately used, and meanings expressed by the two words are the same.

The following describes in detail a sidelink transmission method provided in embodiments of this application with reference to the accompanying drawings.

It should be understood that, for ease of understanding and description, the following describes in detail the method provided in embodiments of this application by using interaction between a first device and a second device as an example.

The first device may be, for example, the foregoing tag, or a tag is deployed on a terminal device; and the second device may be the foregoing reader, or a reader is deployed on a terminal device, or a reader is deployed on a network device. When the first device is the terminal device on which the tag is deployed, and the second device is the terminal device on which the reader is deployed, the first device may be the terminal device 125 or 126 in FIG. 1, and the second device may be the terminal device 124 in FIG. 1. When the first device is the terminal device on which tag is deployed, and the second device is the network device on which the reader is deployed, the first device may be any one of the terminal devices 121 to 123 in FIG. 1, the second device may be the network device 111 in FIG. 1, or the first device may be the terminal device 127 or 128 in FIG. 1, and the second device may be the network device 112 in FIG. 1.

The first device may be, for example, the foregoing wake-up receiver, or the terminal device on which the wake-up receiver is deployed. The second device may be, for example, a network device (for example, a base station or an AP) or a terminal device. When the first device is the terminal device on which the wake-up receiver is deployed, and the second device is the terminal device, the first device may be the terminal device 125 or 126 in FIG. 1, and the second device may be the terminal device 124 in FIG. 1. When the first device is the terminal device on which the wake-up receiver is deployed, and the second device is the network device, the first device may be any one of the terminal devices 121 to 123 in FIG. 1, the second device may be the network device 111 in FIG. 1, or the first device may be the terminal device 127 or 128 in FIG. 1, and the second device may be the network device 112 in FIG. 1.

However, it should be understood that this should not constitute any limitation on an execution body of the method provided in this application. Any device that can perform, by running a program that records code of the method provided in embodiments of this application, the method provided in embodiments of this application may be used as the execution body of the method provided in embodiments of this application. For example, the first device shown in the following embodiments may alternatively be replaced with a component in the first device, for example, a chip, a chip system, or another functional module that can invoke a program and execute the program. For example, the second device may alternatively be replaced with a component in the second device, for example, a chip, a chip system, or another functional module that can invoke a program and execute the program.

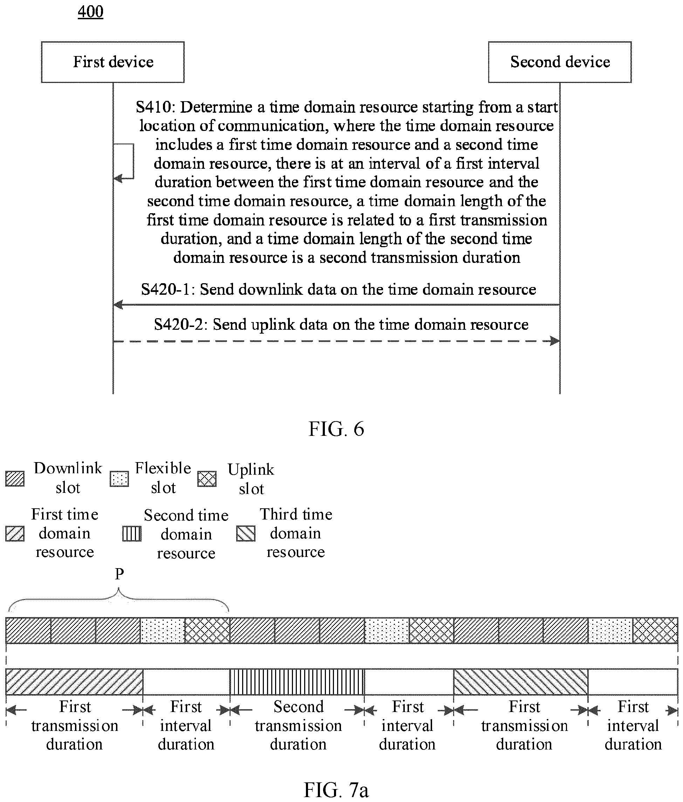

FIG. 6 is a schematic interaction flowchart of a communication method 400 according to an embodiment of this application. As shown in FIG. 6, the method 400 may include S410 and S420. The following describes steps in the method 200 in detail.

S410: A first device determines a time domain resource starting from a start location of communication, where the time domain resource includes a first time domain resource and a second time domain resource, there is at an interval of a first interval duration between the first time domain resource and the second time domain resource, a time domain length of the first time domain resource is related to a first transmission duration, and a time domain length of the second time domain resource is a second transmission duration.

S420-1: A second device sends downlink data on the time domain resource, and correspondingly, the first device receives, on the time domain resource, the downlink data sent by the second device.

S420-2: The first device sends uplink data on the time domain resource, and correspondingly, the second device receives, on the time domain resource, the uplink data sent by the first device.

Either of S420-1 and S420-2 may be performed, or S420-1 and S420-2 may be performed sequentially. For example, after receiving the downlink data sent by the second device, the first device sends the uplink data to the second device. In this way, the first device and the second device communicate with each other by using the time domain resource.

For example, the second device determines the time domain resource starting from the start location of the communication and sends the downlink data to the first device by using the time domain resource, and the first device determines the time domain resource starting from the start location of the communication and receives, on the time domain resource, the downlink data sent by the second device; and/or the first device determines the time domain resource starting from the start location of the communication and sends the uplink data to the second device on the time domain resource, and the second device determines the time domain resource starting from the start location of the communication and receives, on the time domain resource, the uplink data sent by the first device.

It may be understood that an implementation of the second device is the same as or similar to that of the first device. The following uses only an example in which the first device determines the time domain resource starting from the start location of the communication for description.

It should be noted that when the first device receives the downlink data sent by the second device, the downlink data includes a frame header and a data part, where the start location of the communication may be, for example, indicated by indication information carried in the frame header of the downlink data, or the downlink data includes a preamble sequence and a data part, where the second device may obtain time and/or frequency synchronization based on the preamble sequence, and may also determine a boundary of a time unit based on the preamble sequence. The time unit may be a symbol, a slot, a subframe, or a frame, the preamble sequence is located before the data part, and the preamble sequence and the data part may be contiguous or non-contiguous in time domain. The start location of the communication may be determined based on a start location of the preamble sequence, or the start location of the communication may be determined based on an end location of the preamble sequence, or the start location of the communication may be determined based on a start location of the data part. For example, the start location of the communication is the start location of the preamble sequence, the end location of the preamble sequence, or the start location of the data part.

It should be noted that when the first device sends the uplink data to the second device, the uplink data includes a frame header and a data part, where the start location of the communication may be, for example, indicated by indication information carried in the frame header of the uplink data, or the uplink data includes a preamble sequence and a data part, where the second device may obtain time and/or frequency synchronization based on the preamble sequence, and may also determine a boundary of a time unit. The time unit may be a symbol, a slot, a subframe, or a frame, the preamble sequence is located before the data part, and the preamble sequence and the data part may be contiguous or non-contiguous in time domain. The start location of the communication may be determined based on a start location of the preamble sequence, or the start location of the communication may be determined based on an end location of the preamble sequence, or the start location of the communication may be determined based on a start location of the data part. For example, the start location of the communication is the start location of the preamble sequence, the end location of the preamble sequence, or the start location of the data part. The start location of the communication may be determined by the first device, or may be notified by the second device to the first device.

The first transmission duration may be predefined by the first device and/or the second device; or the first transmission duration may be preconfigured. For example, when the first transmission duration is predefined only in the first device, the first device may send signaling to the second device to configure the first transmission duration; or when the first transmission duration is predefined only in the second device, the second device may send signaling to the first device to configure the first transmission duration; or the first transmission duration may be defined in a protocol.

Similar to the first transmission duration, the second transmission duration and the first interval duration may also be predefined, preconfigured, or defined in a protocol. Details are not described herein again.

It should be understood that the first transmission duration may be the same as or may be different from the second transmission duration.

Embodiments of this application may be applicable to any duplex mode, and are particularly applicable to a TDD mode. The following uses an example of application to the TDD mode for description. It should be understood that, in the TDD mode, a slot configuration may include a single-period slot configuration and a dual-period slot configuration.

In the single-period slot configuration, the first transmission duration may be the same as the second transmission duration. With reference to FIG. 7a, each period of TDD includes three downlink slots, one uplink slot, and one flexible slot. For example, a period P of the TDD is 2.5 ms, and the first transmission duration is the same as the second transmission duration, that is, both have three slots. In other words, the first time domain resource and the second time domain resource have a same time domain length.

For example, the time domain resource further includes a third time domain resource, with reference to FIG. 7a, there is the first interval duration between the third time domain resource and the second time domain resource, a time domain length of the third time domain resource is the first transmission duration.

In other words, the time domain resource may be repeated by using a pattern (pattern) in the P period.

It should be understood that the single-period slot configuration in the TDD mode shown in FIG. 7a is an example, but does not constitute any limitation on the single-period slot configuration. For example, at least one slot may be not only one type of slot. A fourth slot, a ninth slot, and a fourteenth slot in FIG. 7a may include at least two of an uplink symbol, a flexible symbol, and a downlink symbol. Correspondingly, units of the first transmission duration and the second transmission duration may be slots or symbols. To be specific, the first time domain resource, the second time domain resource, and the third time domain resource each may include n1 slots and m1 symbols, n2 slots, or m2 symbols, where n1, m1, n2, and m2 are all positive integers.

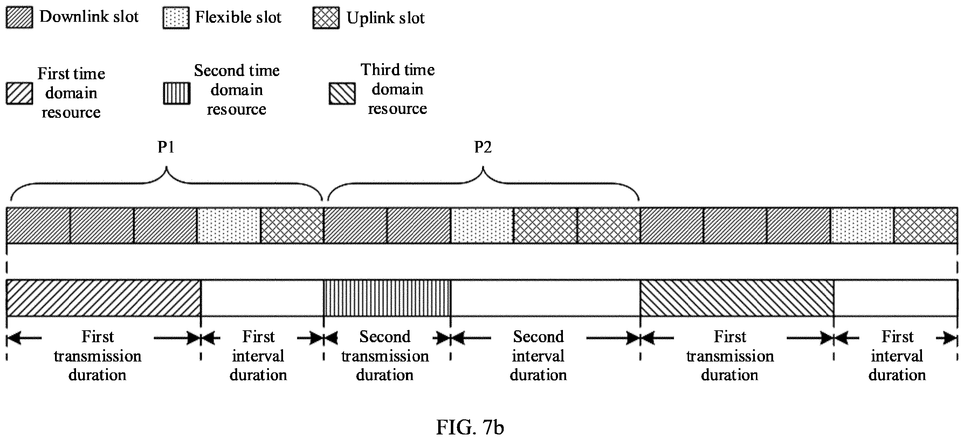

In the dual-period slot configuration, the first transmission duration is generally different from the second transmission duration. With reference to FIG. 7b, a period of TDD includes a first period P1 and a second period P2. The first period P1 includes three downlink slots, one flexible slot, and one uplink slot. The second period P2 includes two downlink slots, one flexible slot, and two uplink slots. For example, the first period P1=5 ms, and the second period P2=5 ms. The first transmission duration has three slots, and the second transmission duration has two slots. In other words, a time domain length of the first time domain resource is different from a time domain length of the second time domain resource.

For example, the time domain resource further includes a third time domain resource, with reference to FIG. 7b, there is at an interval of a second interval duration between the third time domain resource and the second time domain resource, a time domain length of the third time domain resource is the first transmission duration. It may be understood that a fourth time domain resource may be further included after the third time domain resource, there is the first interval duration between the fourth time domain resource and the third time domain resource, and a time domain length of the fourth time domain resource is the second transmission duration.

In other words, the time domain resource may be repeated by using patterns in the period P1 and the period P2.

It should be understood that the dual-period slot configuration in the TDD mode shown in FIG. 7b is an example, but does not constitute any limitation on the dual-period slot configuration. For example, at least one slot may be not only one type of slot. A fourth slot, an eighth slot, and a fourteenth slot in FIG. 7b may include at least two of an uplink symbol, a flexible symbol, and a downlink symbol. Correspondingly, units of the first transmission duration and the second transmission duration may be slots or symbols. To be specific, the first time domain resource, the second time domain resource, and the third time domain resource each may include n3 slots and m3 symbols, n4 slots, or m4 symbols, where n3, m3, n4, and m4 are all positive integers.

It may be understood that when the first device receives all downlink data on the first time domain resource, the time domain resource includes only the first time domain resource. When the first device does not receive all the downlink data on the first time domain resource, the first device continues to receive the downlink data on the second time domain resource, and the time domain resource includes the first time domain resource and the second time domain resource. The rest may be deduced by analogy until the first device receives all the downlink data.

A process in which the first device sends the uplink data to the second device is similar to this process. The first device sequentially sends the uplink data on the first time domain resource, the second time domain resource, the third time domain resource, and the like until the uplink data is sent. The time domain resource includes a time domain resource actually occupied by the first device to send the uplink data.

In some embodiments, the first time domain resource, the second time domain resource, the third time domain resource, and the like in the time domain resource all include at least one of uplink slots, uplink symbols, flexible slots, and flexible symbols, and a resource between two adj acent time domain resources in the first time domain resource, the second time domain resource, the third time domain resource, and the like in the time domain resource includes at least one of the downlink slot, the downlink symbol, the flexible slot, and the flexible symbol; or the first time domain resource, the second time domain resource, the third time domain resource, and the like in the time domain resource all include at least one of downlink slots, downlink symbols, flexible slots, and flexible symbols, and a resource between two adjacent time domain resources in the first time domain resource, the second time domain resource, the third time domain resource, and the like in the time domain resource includes at least one of the uplink slot, the uplink symbol, the flexible slot, and the flexible symbol.

For example, when the first device receives the downlink data sent by the second device, the first time domain resource, the second time domain resource, the third time domain resource, and the like in the time domain resource are all at least one of the downlink slots, the downlink symbols, the flexible slots, and the flexible symbols. When the first device sends the uplink data to the second device, the first time domain resource, the second time domain resource, the third time domain resource, and the like in the time domain resource are all at least one of the uplink slots, the uplink symbols, the flexible slots, and the flexible symbols. In this case, the time domain resource used for communication between the first device and the second device corresponds to a TDD slot configuration in an NR system, thereby reducing interference of uplink/downlink transmission.

Further, it is ensured that a boundary of a time domain resource is aligned with a boundary of an existing time unit (a slot/symbol), to avoid a time domain resource fragment (for example, a half symbol) that cannot be scheduled in an existing network, and reduce impact on time domain resource scheduling in the existing network.

Optionally, the first time domain resource, the second time domain resource, the third time domain resource, and the like that are in the time domain resource and that correspond to the first transmission duration and the second transmission duration and a time domain resource corresponding to any interval duration may also be time domain resources of a same type. For example, both the time domain resources corresponding to the first transmission duration and the second transmission duration and the time domain resource corresponding to the any interval duration include an uplink transmission resource (for example, at least one uplink slot and/or at least one uplink symbol); or both the time domain resources corresponding to the first transmission duration and the second transmission duration and the time domain resource corresponding to the any interval duration include a downlink transmission resource (for example, at least one downlink slot and/or at least one uplink symbol).

Optionally, any one of the first time domain resource, the second time domain resource, the third time domain resource, and the like that are in the time domain resource and that correspond to the first transmission duration and the second transmission duration may include both the uplink transmission resource and the downlink transmission resource (for example, include one uplink slot and one downlink slot). Similarly, the time domain resource corresponding to the any interval duration may also include both the uplink transmission resource and the downlink transmission resource.

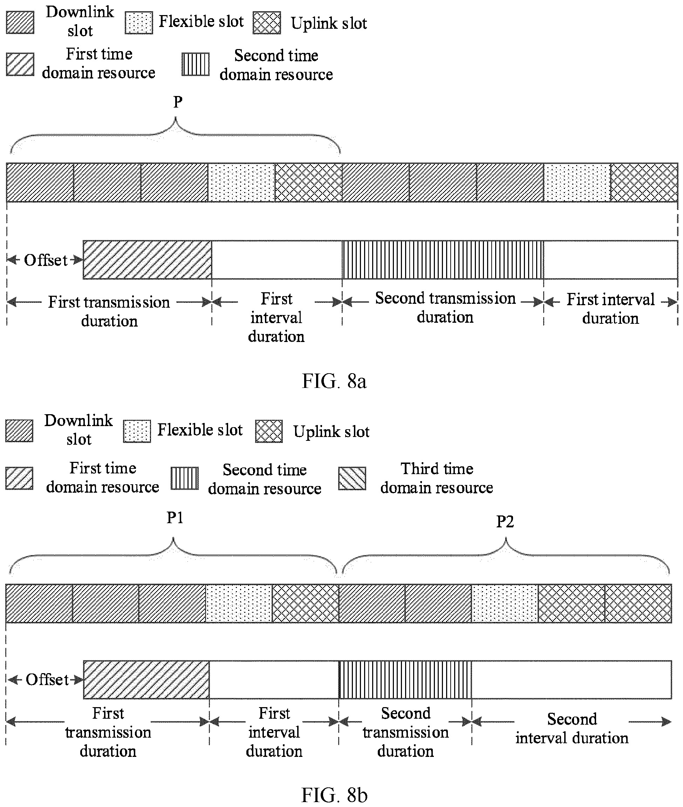

It should be noted that a start location of the time domain resource, that is, a start location of the first time domain resource, may be the start location of the foregoing communication, for example, a start location of the period P in FIG. 7a or a start location of the first period P1 in FIG. 7b. However, in some embodiments, the start location of the first time domain resource may not be the start location of the communication, and there is an offset between the start location of the first time domain resource and the start location of the communication. In this case, a time domain length of the first time domain resource may be less than or greater than the first transmission duration, and the offset may be a quantity of slots, a quantity of symbols, or the like. For example, with reference to FIG. 8a and FIG. 8b, the first device may determine a sum of the start location and the offset of the communication as the start location of the first time domain resource. It is assumed that the offset is one slot and two symbols. Start locations of the first time domain resources in FIG. 8a and FIG. 8b move backward to locations shown in the figures. It is assumed that the offset is a negative value. Start locations of the first time domain resources move forward to corresponding slot locations.

Optionally, the first device may determine a product or a quotient of the start location of the communication and the offset as the start location of the first time domain resource.

In some embodiments, the first device may separately receive, on different frequency domain resources, the downlink data sent by the second device, and send the uplink data to the second device. For example, the first device may receive, on the time domain resource and the first frequency domain resource, the downlink data sent by the second device, and the first device may send the uplink data to the second device on the time domain resource and the second frequency domain resource. There is a frequency domain interval between the first frequency domain resource and the second frequency domain resource. In this case, the first device can be prevented from sending the uplink data and receiving the downlink data at a same frequency, thereby improving transmission reliability.

The first frequency domain resource may be predefined by the first device and/or the second device; or the first frequency domain resource may be preconfigured. For example, when the first frequency domain resource is predefined only in the first device, the first device may send signaling to the second device to configure the first frequency domain resource; or when the first frequency domain resource is predefined only in the second device, the second device may send signaling to the first device to configure the first frequency domain resource; or the first frequency domain resource may be defined in a protocol.

Similar to the first frequency domain resource, the second frequency domain resource may also be predefined, preconfigured, or defined in a protocol. Details are not described herein again.

In some other embodiments, the frequency domain interval may be further preset in the foregoing predefined, preconfigured, or protocol-defined manner. In this case, the first device and the second device may determine the second frequency domain resource based on the first frequency domain resource and the frequency domain interval, or determine the first frequency domain resource based on the second frequency domain resource and the frequency domain interval.

It is assumed that the first device is a tag, and the second device is a reader. The downlink data sent by the second device to the first device on the time domain resource and the first frequency domain resource may be a contiguous carrier. The contiguous carrier may be a sine wave or a cosine wave at a given frequency, or amplitude and/or phase modulation is not performed on a waveform corresponding to the contiguous carrier, or amplitude and/or phase modulation is performed on a waveform corresponding to the contiguous carrier, but an overall amplitude is insufficient to be interpreted by the first device as transmission data.

That the first device sends the uplink data to the second device on the time domain resource and the second frequency domain resource may be specifically that the first device sends, on the time domain resource and the second frequency domain resource, the uplink data to the second device through backscatter communication. For example, the first device modulates a received contiguous carrier, uses the modulated contiguous carrier as a carrier of the uplink data, and backscatters the uplink data to the second device.

Optionally, the time domain resource includes at least one of an uplink slot, an uplink symbol, a flexible slot, and a flexible symbol on the first frequency domain resource, and the time domain resource includes at least one of a downlink slot, a downlink symbol, a flexible slot, and a flexible symbol on the second frequency domain resource; or the time domain resource includes at least one of a downlink slot, a downlink symbol, a flexible slot, and a flexible symbol on the first frequency domain resource, and the time domain resource includes at least one of an uplink slot, an uplink symbol, a flexible slot, and a flexible symbol on the second frequency domain resource. When the time domain resource includes a downlink transmission resource on the first frequency domain resource, and includes an uplink transmission resource on the second frequency domain resource, interference caused by different directions between transmission between the first device and the second device and data transmission in an NR system can be avoided, thereby improving transmission reliability.

It should be noted that the time domain resource may include the first time domain resource, the second time domain resource, the third time domain resource, and the like, or the time domain resource may be any time domain resource configured by using configuration information.

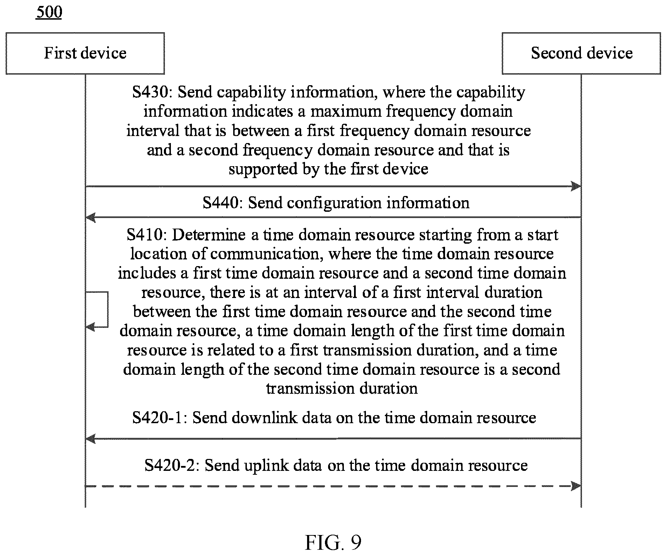

FIG. 9 is a schematic interaction flowchart of a communication method 500 according to an embodiment of this application. As shown in FIG. 9, the method 500 may further include at least one of S430 and S440.

S440: A second device sends configuration information to a first device, and correspondingly, the first device receives the configuration information sent by the second device.

It should be noted that the configuration information may include the foregoing a first transmission duration and/or the first interval duration.

In some embodiments, if the first transmission duration is different from a second transmission duration, the configuration information may further include the second transmission duration.

In some embodiments, the configuration information may further include a second interval duration.

In some embodiments, the configuration information may further include the foregoing offset.

In some embodiments, the configuration information may further include frequency domain interval information, where the frequency domain interval information indicates a frequency domain interval between a first frequency domain resource and a second frequency domain resource.

It should be understood that all information in the configuration information may be sent independently, or may be sent together. For example, the second device may send the frequency domain interval information as independent information to the first device for configuration.

It is assumed that the first device is a terminal device on which a wake-up receiver is deployed. The first device may receive, by using a primary receiver, the configuration information sent by the second device (for example, a network device). The configuration information may be carried in a radio resource control (radio resource control, RRC) release (Release) message.

In some embodiments, the first device may store the received configuration information.

Optionally, the first device may set a corresponding preset timer for the received configuration information. When the preset timer expires, the first device determines that the configuration information is invalid. When the preset timer does not expire, the first device determines that the configuration information is valid.

For example, before sending the frequency domain interval information to the first device, the second device may perform the following S430:

S430: The first device sends capability information to the second device, and correspondingly, the second device receives the capability information sent by the first device, where the capability information indicates a maximum frequency domain interval that is between the first frequency domain resource and the second frequency domain resource and that is supported by the first device.

Further, the second device determines the frequency domain interval between the first frequency domain resource and the second frequency domain resource based on the maximum frequency domain interval, to avoid that a frequency domain interval configured for the first device exceeds a capability range of the first device.

It is assumed that the first device is the wake-up receiver is deployed on the terminal device, and the capability information sent by the first device to the second device may further include information indicating whether the wake-up receiver is supported.

It is assumed that the first device is the wake-up receiver is deployed on the terminal device. The first device may further send assistance information to the second device. The assistance information may include at least one piece of information such as an energy saving level of the terminal device, a preferred paging receiving manner of the terminal device, or a request to enable the wake-up receiver. The preferred paging receiving manner of the terminal device may include receiving paging by using the primary receiver, receiving paging by using the wake-up receiver, or receiving paging by using the wake-up receiver and the primary receiver.

Optionally, both the capability information and the assistance information may be carried in a message 1 or a message 3 in a four-step random access process, or may be carried in a message A in a two-step random access process, or may be carried in terminal capability information (UECapabilityInformation) or terminal assistance information (UEAssistanceInformation). For details about the four-step random access process and the two-step random access process in the NR system, see section 9.2.6 in the 3GPP TS 38.300 version 16.7.0.

Generally, S430 and S440 are performed before S410.

Therefore, in embodiments of this application, the first device determines the time domain resource starting from the start location of the communication, and communicates with the second device on the time domain resource, so that the first device can communicate with the second device in communication systems (for example, an NR communication system), that is, convergence of the IoT and another communication system is implemented.

Further, the time domain resource determined by the first device includes the first time domain resource and the second time domain resource, and there is the first interval duration between the first time domain resource and the second time domain resource, so that the first device can determine a time period in which communication can be performed and a time period in which communication cannot be performed without maintaining timing information (for example, a frame number or a slot number), thereby reducing complexity of the first device and reducing costs of the first device.

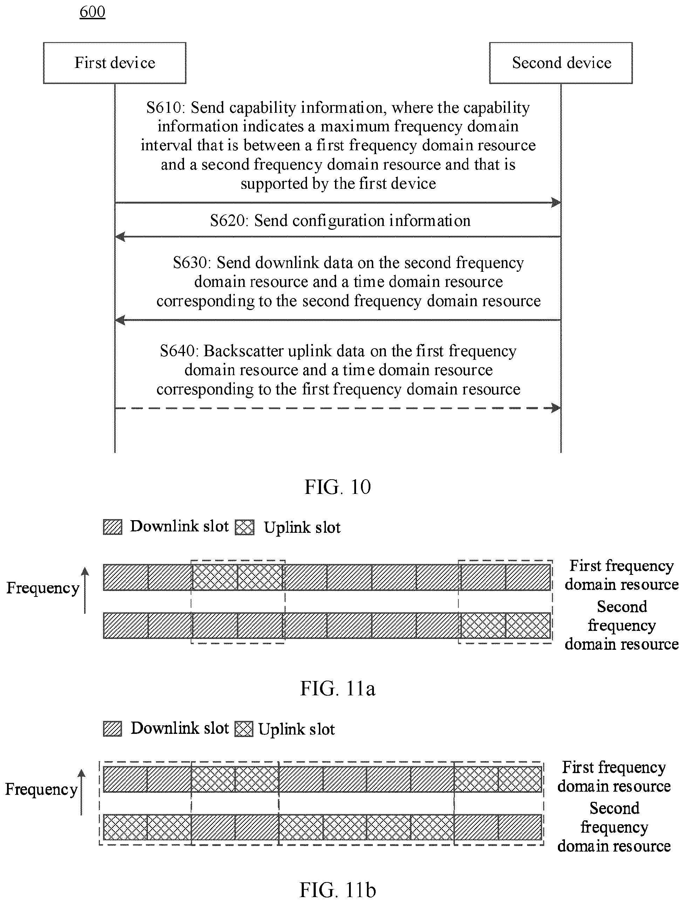

FIG. 10 is a schematic interaction flowchart of a communication method 600 according to an embodiment of this application. As shown in FIG. 10, the method 600 may include some or all processes in S610 to S640. The following describes S610 to S640.

S610: A first device sends capability information to a second device, and correspondingly, the second device receives the capability information sent by the first device, where the capability information indicates a maximum frequency domain interval that is between a first frequency domain resource and a second frequency domain resource and that is supported by the first device.

S620: The second device sends configuration information to the first device, and correspondingly, the first device receives the configuration information sent by the second device.

S630: The second device sends downlink data on the second frequency domain resource and a time domain resource corresponding to the second frequency domain resource, and correspondingly, the first device receives the downlink data on the second frequency domain resource and the time domain resource corresponding to the second frequency domain resource.

S640: The first device sends uplink data on the first frequency domain resource and a time domain resource corresponding to the first frequency domain resource, and correspondingly, the second device receives the uplink data on the first frequency domain resource and the time domain resource corresponding to the first frequency domain resource.

Either of S630 and S640 may be performed, or S630 and S640 may be performed sequentially. For example, after receiving the downlink data sent by the second device, the first device sends the uplink data to the second device. In this way, the first device and the second device communicate with each other by using the time domain resource.

It should be noted that the time domain resource corresponding to the first frequency domain resource and the time domain resource corresponding to the second frequency domain resource each include at least one first time unit, the first time unit is of a first resource type on the time domain resource corresponding to the first frequency domain resource, and the first time unit is of a second resource type on the time domain resource corresponding to the second frequency domain resource.

The first time unit of the first resource type includes an uplink slot, a flexible slot, an uplink symbol, or a flexible symbol, and the first time unit of the second resource type includes a downlink slot, a flexible slot, a downlink symbol, or a flexible symbol.

It should be noted that the first frequency domain resource, the second frequency domain resource, the time domain resource corresponding to the first frequency domain resource, and the time resource corresponding to the second frequency domain resource may all be predefined, preconfigured, or defined in a protocol.

In a possible implementation, at least one of the first frequency domain resource, the second frequency domain resource, the time domain resource corresponding to the first frequency domain resource, and the time resource corresponding to the second frequency domain resource may be configured by using the configuration information sent by the second device to the first device in S620.

Optionally, the time domain resource corresponding to the first frequency domain resource and the time domain resource corresponding to the second frequency domain resource each may include the first time domain resource, the second time domain resource, a third time domain resource, and the like, or the time domain resource may be any time domain resource configured by using the configuration information.

FIG. 11a to FIG. 11d show possible time-frequency resources. A resource marked in a dashed box in any one of FIG. 11a to FIG. 11d includes at least one first time unit. A first device and a second device may select one or more time-frequency resources in the dashed box for communication.

With reference to FIG. 11a and FIG. 11b, a ratio of a quantity of time units corresponding to a first resource type to a quantity of time units corresponding to a second resource type in a same duration is used as a first proportion. For example, a time unit of the first resource type may include at least one of an uplink slot, a flexible slot, an uplink symbol, or a flexible symbol, and a time unit of the second resource type may include at least one of a downlink slot, a flexible slot, a downlink symbol, or a flexible symbol. In FIG. 11a, first proportions respectively corresponding to a first frequency domain resource and a second frequency domain resource are the same. For example, the first proportions each are 2:8. The same duration may be a period or an agreed value. In FIG. 11b, first proportions respectively corresponding to the first frequency domain resource and the second frequency domain resource are reciprocal of each other. For example, the first proportion corresponding to the first frequency domain resource is 2:8, and the first proportion corresponding to the second frequency domain resource is 8:2.

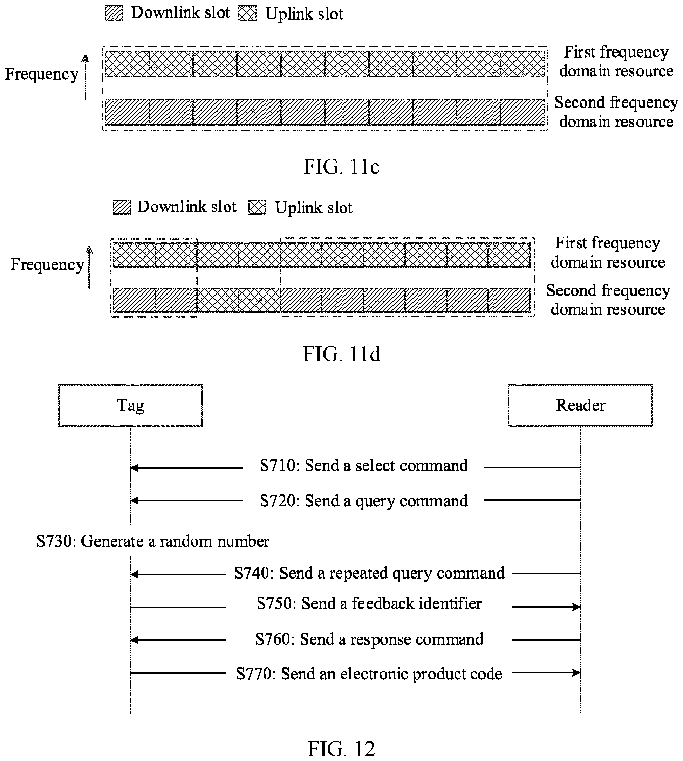

With reference to FIG. 11c, all time units corresponding to the first frequency domain resource are of the first resource type, for example, uplink slots, and all time units corresponding to the second frequency domain resource are of the second resource type, for example, downlink slots.

Optionally, the time unit is a time domain unit, but is not necessarily a minimum time domain unit, for example, may be a slot or a symbol.

With reference to FIG. 11d, all time units corresponding to the first frequency domain resource are of a same resource type, for example, all the time units are uplink slots, and all time units corresponding to the second frequency domain resource are of different resource types; or all time units corresponding to the first frequency domain resource are of different resource types, and all time units corresponding to the second frequency domain resource are of a same resource type(not shown in the figure).

For S620, it should be noted that the second device may send first time-frequency resource configuration information and second time-frequency resource configuration information to the first device. The first time-frequency resource configuration information is used to configure the first frequency domain resource and a time domain resource corresponding to the first frequency domain resource, and the second time-frequency resource configuration information is used to configure the second frequency domain resource and/or a time domain resource corresponding to the second frequency domain resource.

When the second time-frequency resource configuration information is not used to configure the time domain resource corresponding to the second frequency domain resource, the first device and/or the second device may determine, based on the time domain resource corresponding to the first frequency domain resource, the time domain resource corresponding to the second frequency domain resource. For example, the first device and/or the second device determine that the time domain resource corresponding to the first frequency domain resource and the time domain resource corresponding to the second frequency domain resource are a same time domain resource.

When the second time-frequency resource configuration information is used to configure the second frequency domain resource, the second time-frequency resource configuration information may include frequency domain interval information or configuration information of the second frequency domain resource. The configuration information of the second frequency domain resource may directly indicate the second frequency domain resource, and the frequency domain interval information indicates a frequency domain interval between the second frequency domain resource and the first frequency domain resource. For example, when the second time-frequency resource configuration information includes the frequency domain interval information, the first device and/or the second device may determine the second frequency domain resource based on the first frequency domain resource and the frequency domain interval information.

It should be understood that at least one piece of the first time-frequency configuration information and the second time-frequency configuration information may include configuration information in any example in an embodiment shown in FIG. 9.

For S610, it should be noted that the capability information indicates a maximum frequency domain interval between the first frequency domain resource and the second frequency domain resource. A frequency domain interval between the first frequency domain resource and the second frequency domain resource may be limited by using the maximum frequency domain interval. For example, the frequency domain interval between the first frequency domain resource and the second frequency domain resource is limited to be less than or equal to the maximum frequency domain interval.

For example, limitation of the capability information on the frequency domain interval between the first frequency domain resource and the second frequency domain resource may be implemented by the second device. For example, the second device determines, based on the capability information reported by the first device, the frequency domain interval between the first frequency domain resource and the second frequency domain resource, so that the frequency domain interval is less than or equal to the maximum frequency domain interval indicated by the capability information, and sends the frequency domain interval to the first device by using the configuration information, so that the first device determines the first frequency domain resource and the second frequency domain resource that are used for communication.

It may be understood that the capability information in S610 may further include one or more types of capability information shown in S430 in FIG. 9.

FIG. 12 is a schematic diagram of an inventory process according to an embodiment of this application. With reference to FIG. 11, the following describes, by using an example in which a first device is a tag and a second device is a reader, a communication method provided in an embodiment of this application.

It should be noted that the following inventory process is applicable to counting a quantity of items that are randomly deployed or carry tags. For example, if tags are deployed on a car, a quantity of vehicles on a specific road section can be counted by using the reader. If tags are carried on clothes, shoes, and accessories in an inventory, a quantity of items in an inventory can be counted. If tags are carried on cows and sheep, a quantity of cows or sheep in a pastoral area can be counted.

Optionally, in an inventory operation, the reader may read an electronic product code (electronic product code, EPC) of the tag.

The following describes the inventory process through information interaction between the reader and the tag.

S710: The reader sends a select (select) command to the tag.

S720: The reader sends a query (query) command to the tag.

S730: The tag generates a random number.

S740: The reader sends a repeated query (queryrep) command to the tag.

S750: The tag sends a feedback identifier (for example, a 16-bit random number RN16) to the reader.

S760: The reader sends, to the tag, a response command (for example, an acknowledgment (acknowledgment, ACK) command or a negative acknowledgment (negative acknowledgment, NAK) command).

S770: The tag sends the EPC to the reader.

For S710, it should be noted that before the inventory, the reader may select a specific tag group by using one or more select commands. The select command may be used a plurality of times consecutively, and only a tag that satisfies a plurality of select commands responds. This can implement operations similar to hash (hash) or Bloom (Bloom) filtering, reduce a collision probability, and improve efficiency of inventory of the tag.

For S720, it should be noted that after a link parameter is initialized and an internal random slot counter of the tag is set, the query command starts an inventory period, and initializes parameters such as a downlink data rate, an uplink data rate, a coding scheme, a session (session), a target (target), and a Q value.

In S730, a tag that meets sel and the target generates a random number, where the sel is a name of a field in the query command, and the random number is placed into the slot counter, and a tag state changes from a ready (ready) state to an arbitrate (arbitrate) state.

When a value of the slot counter is 0, the 16-bit random number RN16 is returned, and the tag status changes from the arbitrate state to a reply state. When the value of the slot counter is not 0, the tag remains silent and the arbitrate state is maintained.

It should be understood that, the tag feeds back RN16 when the value of the slot counter is 0, to avoid a problem of a data conflict (or a data collision) caused when a plurality of tags send feedback identities to the reader at the same time.

When the tag returns RN16, the reader performs S740 until RN16 sent by the tag is received. It should be noted that, RN16 is only an example, and the tag may further send any feedback identifier to the reader, to implement identification of the identity by the reader.

For S740, it should be noted that the queryrep command is used to decrease the value of the slot counter of the tag, where the value of the slot counter is decreased by 1 when the tag is selected. If the value of the slot counter is 0, the tag returns RN16; or if the value of the slot counter is not 0, the tag remains silent.

For S760, it should be noted that, if the reader successfully receives RN16, the reader returns the ACK command including RN16; if the reader fails to receive RN16, the reader may return the NAK command, and at this time, the tag enters the arbitrate state, and an inventory flag bit does not change.

For S770, it should be noted that, after receiving the ACK command, the tag returns EPC information; and after receiving the EPC, the reader completes inventory of the tag. After the EPC is returned, the tag is in an acknowledged (acknowledged) state. After the query command, an adjustment query (queryadjust) command, and the queryrep command are received, the tag returns to the ready state, and an inventory flag is flipped to avoid repeated responses in the inventory period. The EPC is the electronic product code, which is used to identify an item on which the electronic product code is attached.

In S710 to S770, at least one of the select command, the query command, the queryrep command, the queryadjust command, and the response command may carry configuration information. The configuration information may include any one or more of the foregoing information that can be configured. For example, the configuration information may include at least one of the first transmission duration, the second transmission duration, the first interval duration, the second interval duration, the frequency domain interval information, the first time-frequency resource configuration information, and the second time-frequency resource configuration information. Descriptions of each configuration information are as described above.

In addition, the foregoing configuration information may further include enabling information of transform precoder. The reader may indicate, by using the enabling information of the transform precoder, to the tag whether to enable (enable) the transform precoder (transform precoder). If the transform precoder is enabled, a waveform of data transmission is discrete Fourier transform spread orthogonal frequency division multiplexing (DFT-S-OFDM). If the transform precoder is disabled, the waveform of the data transmission is cyclic prefix orthogonal frequency division multiplexing (CP-OFDM).

Optionally, the select command in S710 is signaling initially transmitted between the reader and the tag. A time domain resource used by the select command during transmission may not have a resource corresponding to the first interval duration and/or the second interval duration. In other words, the reader sends the select command as much as possible in contiguous downlink time units, or the reader sends the select command based on a preset pattern. For example, the select command is sent at an interval of one first interval duration after being sent in one first transmission duration, the first transmission duration and the first interval duration may be agreed values, and the agreed values are known to both the reader and the tag.

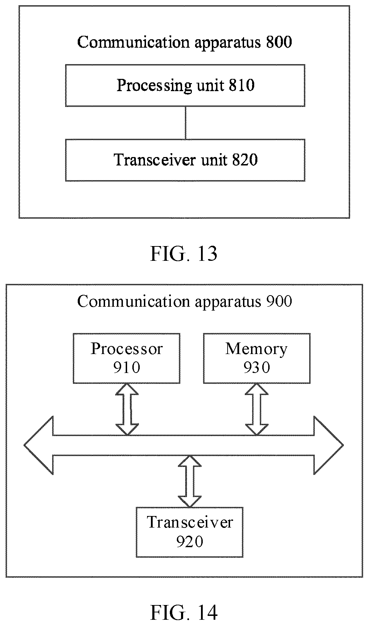

The methods provided in embodiments of this application are described above in detail with reference to FIG. 6 to FIG. 12. Apparatuses provided in embodiments of this application are described in detail in the following with reference to FIG. 13 and FIG. 14.

FIG. 13 is a schematic block diagram of a communication apparatus according to an embodiment of this application. As shown in FIG. 13, an apparatus 800 may include a processing unit 810 and a transceiver unit 820.

Optionally, the communication apparatus 800 may correspond to the first device in the foregoing method embodiments, for example, may be the first device or a component (for example, a chip or a chip system) configured in the first device.

It should be understood that the communication apparatus 800, for example, may correspond to the first device in the method 400, the method 500, or the method 600 in embodiments of this application. The communication apparatus 800 may include units configured to perform the method performed by the first device in the method 400 in FIG. 6, the method 500 in FIG. 9, or the method 600 in FIG. 10. In addition, the units in the communication apparatus 800 and the foregoing other operations and/or functions are used to implement corresponding procedures of the method 400 in FIG. 6, the method 500 in FIG. 9, or the method 600 in FIG. 10.

When the communication apparatus 800 is configured to perform the method 400 in FIG. 6, the processing unit 810 may be configured to determine a time domain resource starting from a start location of communication, where the time domain resource includes a first time domain resource and a second time domain resource, there is at an interval of a first interval duration between the first time domain resource and the second time domain resource, a time domain length of the first time domain resource is related to a first transmission duration, and a time domain length of the second time domain resource is a second transmission duration; and the transceiver unit 820 is configured to communicate with a second device on the time domain resource.

In some embodiments, the first transmission duration is the same as the second transmission duration.

In some embodiments, the first transmission duration is different from the second transmission duration.

In some embodiments, the time domain resource further includes a third time domain resource, there is at an interval of a second interval duration between the second time domain resource and the third time domain resource, a time domain length of the third time domain resource is related to the first transmission duration, and the second interval duration is different from the first interval duration.

In some embodiments, a start time domain location of the first time domain resource is an offset location or the start location of the communication, and the offset location is determined based on an offset and the start location of the communication.

In some embodiments, the offset location is equal to a sum of the offset and the start location of the communication.

In some embodiments, the transceiver unit 820 is further configured to receive configuration information sent by the second device, where the configuration information includes the first transmission duration and/or the first interval duration.

In some embodiments, the configuration information further includes the second transmission duration.

In some embodiments, the configuration information further includes a second interval duration, and the second interval duration is different from the first interval duration.

In some embodiments, the configuration information further includes an offset, and the offset is used to determine a start time domain location of the first time domain resource.

In some embodiments, both the first time domain resource and the second time domain resource include at least one of an uplink slot, an uplink symbol, a flexible slot, and a flexible symbol, and a resource between the first time domain resource and the second time domain resource includes at least one of a downlink slot, a downlink symbol, a flexible slot, and a flexible symbol; or both the first time domain resource and the second time domain resource include at least one of a downlink slot, a downlink symbol, a flexible slot, and a flexible symbol, and a resource between the first time domain resource and the second time domain resource includes at least one of an uplink slot, an uplink symbol, a flexible slot, and a flexible symbol.

In some embodiments, the transceiver unit 820 is specifically configured to: receive, on the time domain resource and a first frequency domain resource, downlink data sent by the second device; and send, on the time domain resource and a second frequency domain resource, uplink data to the second device through backscatter communication, where there is a frequency domain interval between the first frequency domain resource and the second frequency domain resource.

In some embodiments, the time domain resource includes at least one of an uplink slot, an uplink symbol, a flexible slot, and a flexible symbol on the first frequency domain resource, and the time domain resource includes at least one of a downlink slot, a downlink symbol, a flexible slot, and a flexible symbol on the second frequency domain resource; or the time domain resource includes at least one of a downlink slot, a downlink symbol, a flexible slot, and a flexible symbol on the first frequency domain resource, and the time domain resource includes at least one of an uplink slot, an uplink symbol, a flexible slot, and a flexible symbol on the second frequency domain resource.

In some embodiments, the transceiver unit 820 is further configured to receive frequency domain interval information sent by the second device, where the frequency domain interval information indicates the frequency domain interval between the first frequency domain resource and the second frequency domain resource.

In some embodiments, the processing unit 810 is further configured to: when a preset timer expires, determine that the configuration information is invalid; or when a preset timer does not expire, determine that the configuration information is valid.

In some embodiments, the transceiver unit 820 is further configured to send capability information to the second device, where the capability information indicates a maximum frequency domain interval that is between the first frequency domain resource and the second frequency domain resource and that is supported by the first device.

When the communication apparatus 800 is configured to perform the method 500 in FIG. 9, the transceiver unit 820 may be configured to perform at least one of steps 430, 440, 420-1, and 420-1 in the method 500, and the processing unit 810 may be configured to perform step 410 in the method 500. When the communication apparatus 800 is configured to perform the method 600 in FIG. 10, the transceiver unit 820 may be configured to perform at least one of steps 610, 620, 630, and 640 in the method 600. It should be understood that a specific process in which the units perform the foregoing corresponding steps is described in detail in the foregoing method embodiments. For brevity, details are not described herein again.

Optionally, the communication apparatus 800 may correspond to the second device in the foregoing method embodiments, for example, may be the second device or a component (for example, a chip or a chip system) configured in the second device.

It should be understood that the communication apparatus 800, for example, may correspond to the second device in the method 400, the method 500, or the method 600 in embodiments of this application. The communication apparatus 800 may include units configured to perform the method performed by the second device in the method 400 in FIG. 6, the method 500 in FIG. 9, or the method 600 in FIG. 10. In addition, the units in the communication apparatus 800 and the foregoing other operations and/or functions are used to implement corresponding procedures of the method 400 in FIG. 6, the method 500 in FIG. 9, or the method 600 in FIG. 10.

When the communication apparatus 800 is configured to perform the method 400 in FIG. 6, the processing unit 810 may be configured to determine a time domain resource starting from a start location of communication, where the time domain resource includes a first time domain resource and a second time domain resource, there is at an interval of a first interval duration between the first time domain resource and the second time domain resource, a time domain length of the first time domain resource is related to a first transmission duration, and a time domain length of the second time domain resource is a second transmission duration; and the transceiver unit 820 is configured to communicate with a first device on the time domain resource.

In some embodiments, the first transmission duration is the same as the second transmission duration.

In some embodiments, the first transmission duration is different from the second transmission duration.

In some embodiments, the time domain resource further includes a third time domain resource, there is at an interval of a second interval duration between the second time domain resource and the third time domain resource, a time domain length of the third time domain resource is related to the first transmission duration, and the second interval duration is different from the first interval duration.

In some embodiments, a start time domain location of the first time domain resource is an offset location or the start location of the communication, and the offset location is determined based on an offset and the start location of the communication.

In some embodiments, the offset location is equal to a sum of the offset and the start location of the communication.

In some embodiments, the transceiver unit 820 is further configured to send configuration information to the first device, where the configuration information includes the first transmission duration and/or the first interval duration.

In some embodiments, the configuration information further includes the second transmission duration.

In some embodiments, the configuration information further includes a second interval duration, and the second interval duration is different from the first interval duration.

In some embodiments, the configuration information further includes an offset, and the offset is used to determine a start time domain location of the first time domain resource.

In some embodiments, both the first time domain resource and the second time domain resource include at least one of an uplink slot, an uplink symbol, a flexible slot, and a flexible symbol, and a resource between the first time domain resource and the second time domain resource includes at least one of a downlink slot, a downlink symbol, a flexible slot, and a flexible symbol; or both the first time domain resource and the second time domain resource include at least one of a downlink slot, a downlink symbol, a flexible slot, and a flexible symbol, and a resource between the first time domain resource and the second time domain resource includes at least one of an uplink slot, an uplink symbol, a flexible slot, and a flexible symbol.

In some embodiments, the transceiver unit 820 is specifically configured to: send, on the time domain resource and a first frequency domain resource, downlink data to the first device; and receive, on the time domain resource and a second frequency domain resource, uplink data sent by the first device through backscatter communication, where there is a frequency domain interval between the first frequency domain resource and the second frequency domain resource.

In some embodiments, the time domain resource includes at least one of an uplink slot, an uplink symbol, a flexible slot, and a flexible symbol on the first frequency domain resource, and the time domain resource includes at least one of a downlink slot, a downlink symbol, a flexible slot, and a flexible symbol on the second frequency domain resource; or the time domain resource includes at least one of a downlink slot, a downlink symbol, a flexible slot, and a flexible symbol on the first frequency domain resource, and the time domain resource includes at least one of an uplink slot, an uplink symbol, a flexible slot, and a flexible symbol on the second frequency domain resource.

In some embodiments, the transceiver unit 820 is further configured to send frequency domain interval information to the first device, where the frequency domain interval information indicates the frequency domain interval between the first frequency domain resource and the second frequency domain resource.

In some embodiments, the transceiver unit 820 is further configured to receive capability information sent by the first device, where the capability information indicates a maximum frequency domain interval that is between the first frequency domain resource and the second frequency domain resource and that is supported by the first device.

When the communication apparatus 800 is configured to perform the method 500 in FIG. 9, the transceiver unit 820 may be configured to perform at least one of steps 430, 440, 420-1, and 420-1 in the method 500. When the communication apparatus 800 is configured to perform the method 600 in FIG. 10, the transceiver unit 820 may be configured to perform at least one of steps 610, 620, 630, and 640 in the method 600. It should be understood that a specific process in which the units perform the foregoing corresponding steps is described in detail in the foregoing method embodiments. For brevity, details are not described herein again.

It should be further understood that a specific process in which the units perform the foregoing corresponding steps is described in detail in the foregoing method embodiments. For brevity, details are not described herein again.

When the communication apparatus 800 is a communication device (for example, the first device or the second device), the transceiver unit 820 in the communication apparatus 800 may be implemented by using a transceiver, for example, may correspond to a transceiver 920 in a communication apparatus device 900 shown in FIG. 11; and the processing unit 810 in the communication apparatus 800 may be implemented by using at least one processor, for example, may correspond to a processor 910 in the communication apparatus 900 shown in FIG. 11.

When the communication apparatus 800 is a chip or a chip system configured in a communication device (for example, the first device or the second device), the transceiver unit 820 in the communication apparatus 800 may be implemented by using an input/output interface, a circuit, or the like; and the processing unit 810 in the communication apparatus 800 may be implemented by using a processor, a microprocessor, an integrated circuit, or the like integrated in the chip or the chip system.

FIG. 14 is another schematic block diagram of a communication apparatus according to an embodiment of this application. As shown in FIG. 14, the apparatus 900 may include the processor 910, the transceiver 920, and a memory 930. The processor 910, the transceiver 920, and the memory 930 communicate with each other by using an internal connection path. The memory 930 is configured to store instructions. The processor 910 is configured to execute the instructions stored in the memory 930, to control the transceiver 920 to send a signal and/or to receive a signal.

It should be understood that the communication apparatus 900 may correspond to the first device or the second device in the foregoing method embodiments, and may be configured to perform steps and/or procedures performed by the first device or the second device in the foregoing method embodiments. Optionally, the memory 930 may include a read-only memory and a random access memory, and provide instructions and data for the processor. A part of the memory may further include a nonvolatile random access memory. The memory 930 may be an independent device, or may be integrated into the processor 910. The processor 910 may be configured to execute the instructions stored in the memory 930; and when the processor 910 executes the instructions stored in the memory, the processor 910 is configured to perform steps and/or procedures corresponding to the first device or the second device in the foregoing method embodiments.

Optionally, the communication apparatus 900 is the first device in the foregoing embodiments.

Optionally, the communication apparatus 900 is the second device in the foregoing embodiments.

The transceiver 920 may include a transmitter and a receiver. The transceiver 920 may further include an antenna, and there may be one or more antennas. The processor 910, the memory 930, and the transceiver 920 may be devices integrated on different chips. For example, the processor 910 and the memory 930 may be integrated into a baseband chip, and the transceiver 920 may be integrated into a radio frequency chip. Alternatively, the processor 910, the memory 930, and the transceiver 920 may be devices integrated on a same chip. This is not limited in this application.

Optionally, the communication apparatus 900 is a component configured in the first device, for example, a chip or a chip system.

Optionally, the communication apparatus 900 is a component configured in the second device, for example, a chip or a chip system.

The transceiver 920 may be a communication interface, for example, an input/output interface or a circuit. The transceiver 920, the processor 910, and the memory 920 may be integrated into a same chip, for example, integrated into the baseband chip.

This application further provides a processing apparatus, including at least one processor. The at least one processor is configured to execute a computer program stored in a memory, so that the processing apparatus performs the methods performed by the test device, the first device, or the second device in the foregoing method embodiments.

An embodiment of this application further provides a processing apparatus, including a processor and an input/output interface. The input/output interface is coupled to the processor. The input/output interface is configured to input and/or output information. The information includes at least one of instructions and data. The processor is configured to execute a computer program, so that the processing apparatus performs the methods performed by the first device or the second device in the foregoing method embodiments.

An embodiment of this application further provides a processing apparatus, including a processor and a memory. The memory is configured to store a computer program, and the processor is configured to invoke the computer program from the memory and run the computer program, so that the processing apparatus performs the methods performed by the first device or the second device in the foregoing method embodiments.

It should be understood that the processing apparatus may be one or more chips. For example, the processing apparatus may be a field programmable gate array (field programmable gate array, FPGA), an application-specific integrated circuit (application-specific integrated circuit, ASIC), a system-on-a-chip (system-on-a-chip, SoC), a central processing unit (central processing unit, CPU), a network processor (network processor, NP), a digital signal processor (digital signal processor, DSP), a microcontroller unit (microcontroller unit, MCU), a programmable logic device (programmable logic device, PLD), or another integrated chip.

In an implementation process, steps in the foregoing methods can be implemented by using a hardware integrated logical circuit in the processor, or by using instructions in a form of software. The steps of the methods disclosed with reference to embodiments of this application may be directly performed by a hardware processor, or may be performed by a combination of hardware and software modules in the processor. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor, or the like. The steps of the methods disclosed with reference to embodiments of this application may be directly performed by a hardware decoding processor, or may be performed by a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, a plurality of forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

According to the methods provided in embodiments of this application, this application further provides a computer program product. The computer program product includes computer program code. When the computer program code is run on a computer, the computer is enabled to perform the method performed by the first device in the embodiment shown in FIG. 6, FIG. 9, or FIG. 10, or the computer is enabled to perform the method performed by the second device in the embodiment shown in FIG. 6, FIG. 9, or FIG. 10.

According to the methods provided in embodiments of this application, this application further provides a computer-readable storage medium. The computer-readable storage medium stores program code. When the program code is run on a computer, the computer is enabled to perform the method performed by the first device in the embodiment shown in FIG. 6, FIG. 9, or FIG. 10, or the computer is enabled to perform the method performed by the second device in the embodiment shown in FIG. 6, FIG. 9, or FIG. 10.

According to the methods provided in embodiments of this application, this application further provides a communication system. The communication system may include the foregoing first device and second device.

The terms "component", "module", and "system" and the like used in this specification indicate computer-related entities, hardware, firmware, combinations of hardware and software, software, or software being executed. For example, a component may be but is not limited to a process that is run on a processor, a processor, an object, an executable file, an execution thread, a program, and/or a computer. As shown in the figures, both a computing device and an application that runs on the computing device may be components. One or more components may reside within the process and/or the execution thread, and the component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network, for example, the Internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for detailed working processes of the foregoing systems, apparatuses, and units, refer to corresponding processes in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, like a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
determining, by a first device, a time domain resource starting from a start location of communication, wherein the time domain resource comprises a first time domain resource and a second time domain resource, there is at an interval of a first interval duration between the first time domain resource and the second time domain resource, a time domain length of the first time domain resource is related to a first transmission duration, and a time domain length of the second time domain resource is a second transmission duration; and
communicating, by the first device, with a second device on the time domain resource.

2. The method according to claim 1, wherein the first transmission duration is the same as the second transmission duration.

3. The method according to claim 1, wherein the first transmission duration is different from the second transmission duration.

4. The method according to claim 3, wherein the time domain resource further comprises a third time domain resource, there is at an interval of a second interval duration between the second time domain resource and the third time domain resource, a time domain length of the third time domain resource is related to the first transmission duration, and the second interval duration is different from the first interval duration.

5. The method according to any one of claims 1 to 4, wherein a start time domain location of the first time domain resource is an offset location or the start location of the communication, and the offset location is determined based on an offset and the start location of the communication.

6. The method according to claim 5, wherein the offset location is equal to a sum of the offset and the start location of the communication.

7. The method according to any one of claims 1 to 6, wherein the communicating, by the first device, with a second device on the time domain resource comprises:
receiving, by the first device on the time domain resource and a first frequency domain resource, downlink data sent by the second device; and
sending, by the first device on the time domain resource and a second frequency domain resource, uplink data to the second device through backscatter communication, wherein
there is a frequency domain interval between the first frequency domain resource and the second frequency domain resource.

8. The method according to claim 7, wherein the method further comprises:
receiving, by the first device, frequency domain interval information sent by the second device, wherein the frequency domain interval information indicates the frequency domain interval between the first frequency domain resource and the second frequency domain resource.

9. The method according to any one of claims 1 to 8, wherein the method further comprises:
sending, by the first device, capability information to the second device, wherein the capability information indicates a maximum frequency domain interval that is between the first frequency domain resource and the second frequency domain resource and that is supported by the first device.

10. A communication method, wherein the method comprises:
determining, by a second device, a time domain resource starting from a start location of communication, wherein the time domain resource comprises a first time domain resource and a second time domain resource, there is at an interval of a first interval duration between the first time domain resource and the second time domain resource, a time domain length of the first time domain resource is related to a first transmission duration, and a time domain length of the second time domain resource is a second transmission duration; and
communicating, by the second device, with a first device on the time domain resource.

11. The method according to claim 10, wherein the first transmission duration is the same as the second transmission duration.

12. The method according to claim 10, wherein the first transmission duration is different from the second transmission duration.

13. The method according to claim 12, wherein the time domain resource further comprises a third time domain resource, there is at an interval of a second interval duration between the second time domain resource and the third time domain resource, a time domain length of the third time domain resource is related to the first transmission duration, and the second interval duration is different from the first interval duration.

14. The method according to any one of claims 10 to 13, wherein a start time domain location of the first time domain resource is an offset location or the start location of the communication, and the offset location is determined based on an offset and the start location of the communication.

15. The method according to claim 14, wherein the offset location is equal to a sum of the offset and the start location of the communication.

16. The method according to any one of claims 10 to 15, wherein the communicating, by the second device, with a first device on the time domain resource comprises:
sending, by the second device on the time domain resource and a first frequency domain resource, downlink data to the first device; and
receiving, by the second device on the time domain resource and a second frequency domain resource, uplink data sent by the first device through backscatter communication, wherein
there is a frequency domain interval between the first frequency domain resource and the second frequency domain resource.

17. The method according to claim 16, wherein the method further comprises:
sending, by the second device, frequency domain interval information to the first device, wherein the frequency domain interval information indicates the frequency domain interval between the first frequency domain resource and the second frequency domain resource.

18. The method according to any one of claims 10 to 17, wherein the method further comprises:
receiving, by the second device, capability information sent by the first device, wherein the capability information indicates a maximum frequency domain interval that is between the first frequency domain resource and the second frequency domain resource and that is supported by the first device.

19. A communication apparatus, comprising:
a processing unit, configured to determine a time domain resource starting from a start location of communication, wherein the time domain resource comprises a first time domain resource and a second time domain resource, there is at an interval of a first interval duration between the first time domain resource and the second time domain resource, a time domain length of the first time domain resource is related to a first transmission duration, and a time domain length of the second time domain resource is a second transmission duration; and
a transceiver unit, configured to communicate with a second device on the time domain resource.

20. The apparatus according to claim 19, wherein the first transmission duration is the same as the second transmission duration.

21. The apparatus according to claim 19, wherein the first transmission duration is different from the second transmission duration.

22. The apparatus according to claim 21, wherein the time domain resource further comprises a third time domain resource, there is at an interval of a second interval duration between the second time domain resource and the third time domain resource, a time domain length of the third time domain resource is related to the first transmission duration, and the second interval duration is different from the first interval duration.

23. The apparatus according to any one of claims 19 to 22, wherein a start time domain location of the first time domain resource is an offset location or the start location of the communication, and the offset location is determined based on an offset and the start location of the communication.

24. The apparatus according to claim 23, wherein the offset location is equal to a sum of the offset and the start location of the communication.

25. The apparatus according to any one of claims 19 to 24, wherein the transceiver unit is specifically configured to:
receive, on the time domain resource and a first frequency domain resource, downlink data sent by the second device; and
send, on the time domain resource and a second frequency domain resource, uplink data to the second device through backscatter communication, wherein
there is a frequency domain interval between the first frequency domain resource and the second frequency domain resource.

26. The apparatus according to claim 25, wherein the transceiver unit is further configured to:
receive frequency domain interval information sent by the second device, wherein the frequency domain interval information indicates the frequency domain interval between the first frequency domain resource and the second frequency domain resource.

27. The apparatus according to any one of claims 19 to 26, wherein the transceiver unit is further configured to:
send capability information to the second device, wherein the capability information indicates a maximum frequency domain interval that is between the first frequency domain resource and the second frequency domain resource and that is supported by the communication apparatus.

28. A communication apparatus, comprising:
a processing unit, configured to determine a time domain resource starting from a start location of communication, wherein the time domain resource comprises a first time domain resource and a second time domain resource, there is at an interval of a first interval duration between the first time domain resource and the second time domain resource, a time domain length of the first time domain resource is related to a first transmission duration, and a time domain length of the second time domain resource is a second transmission duration; and
a transceiver unit, configured to communicate with a first device on the time domain resource.

29. The apparatus according to claim 28, wherein the first transmission duration is the same as the second transmission duration.

30. The apparatus according to claim 28, wherein the first transmission duration is different from the second transmission duration.

31. The apparatus according to claim 30, wherein the time domain resource further comprises a third time domain resource, there is at an interval of a second interval duration between the second time domain resource and the third time domain resource, a time domain length of the third time domain resource is related to the first transmission duration, and the second interval duration is different from the first interval duration.

32. The apparatus according to any one of claims 28 to 31, wherein a start time domain location of the first time domain resource is an offset location or the start location of the communication, and the offset location is determined based on an offset and the start location of the communication.

33. The apparatus according to claim 32, wherein the offset location is equal to a sum of the offset and the start location of the communication.

34. The apparatus according to any one of claims 28 to 33, wherein the transceiver unit is specifically configured to:
send, on the time domain resource and a first frequency domain resource, downlink data to the first device; and
receive, on the time domain resource and a second frequency domain resource, uplink data sent by the first device through backscatter communication, wherein
there is a frequency domain interval between the first frequency domain resource and the second frequency domain resource.

35. The apparatus according to claim 34, wherein the transceiver unit is further configured to:
send frequency domain interval information to the first device, wherein the frequency domain interval information indicates the frequency domain interval between the first frequency domain resource and the second frequency domain resource.

36. The apparatus according to any one of claims 28 to 35, wherein the transceiver unit is further configured to:
receive capability information sent by the first device, wherein the capability information indicates a maximum frequency domain interval that is between the first frequency domain resource and the second frequency domain resource and that is supported by the first device.

37. A communication apparatus, comprising a processor and a memory, wherein the memory is configured to store a computer program, and the processor is configured to invoke and run a computer program stored in the memory, to perform the method according to any one of claims 1 to 18.

38. A chip, comprising a processor, configured to invoke computer instructions from a memory and run the computer instructions, so that a device in which the chip is installed performs the method according to any one of claims 1 to 18.

39. A computer-readable storage medium, configured to store computer program instructions, wherein the computer program enables a computer to perform the method according to any one of claims 1 to 18.

40. A computer program product, comprising computer program instructions, wherein the computer program instructions enable a computer to perform the method according to any one of claims 1 to 18.
